# EUROPEAN PATENT SPECIFICATION

(11) **EP 3 157 084 B1**
(45) Date of publication and mention of the grant of the patent: **01.04.2020**
(21) Application number: 16182799.3
(22) Date of filing: 04.08.2016
(51) Int. Cl.: H01M 12/08, H01M 4/96, H01M 4/86, H01M 4/88, H01M 8/1004, H01M 8/1044, H01M 8/1053

(54) **COMPOSITE CATHODE, CATHODE-MEMBRANE ASSEMBLY, ELECTROCHEMICAL CELL INCLUDING THE CATHODE-MEMBRANE ASSEMBLY, AND METHOD OF PREPARING THE CATHODE-MEMBRANE ASSEMBLY**
KATHODENMATERIAL, KATHODENMEMBRANANORDNUNG, ELEKTROCHEMISCHE ZELLE MIT DER KATHODENMEMBRANANORDNUNG UND VERFAHREN ZUR HERSTELLUNG DER KATHODENMEMBRANANORDNUNG
CATHODE COMPOSITE, ENSEMBLE CATHODE-MEMBRANE, CELLULE ÉLECTROCHIMIQUE CONTENANT L'ENSEMBLE CATHODE-MEMBRANE ET PROCÉDÉ DE PRÉPARATION DE L'ENSEMBLE CATHODE-MEMBRANE

(30) Priority: 31.08.2015 KR 20150123200
(43) Date of publication of application: 19.04.2017
(73) Proprietor: Samsung Electronics Co., Ltd., Suwon-si, Gyeonggi-do 16677 (KR)
(72) Inventor: KIM, Joonhee, 16678 Gyeonggi-do (KR); PARK, Jungock, 16678 Gyeonggi-do (KR); CHOI, Kyounghwan, 16678 Gyeonggi-do (KR)
(74) Representative: Elkington and Fife LLP

(56) References cited:
- WO-A1-2015/037950
- US-A1- 2011 059 355
- US-A1- 2015 079 485
- US-A1- 2015 140 452

## Description

### FIELD OF THE INVENTION

The present disclosure relates to a composite cathode, a cathode-membrane assembly, an electrochemical cell including the cathode-membrane assembly, and methods of preparing the cathode-membrane assembly.

### BACKGROUND OF THE INVENTION

A metal air cell includes an anode capable of plating/stripping metal ions, a cathode configured to oxidize/reduce oxygen in air, and a metal ion conductive membrane disposed between the cathode and the anode.

Since the metal air cell includes a metal as the anode, and does not store air for use as a positive electrode active material, the metal air cell can provide high capacity. A theoretical specific energy of the metal air cell may be very high, for example, greater than or equal to about 3,500 watt-hours per kilogram (Wh/kg). However, there still remains a need for a metal air cell having an improved discharge capacity and specific energy.

US 2011/059355 discloses lithium/air batteries and methods of making and using the same. Certain embodiments are pouch-cell batteries encased within an oxygen-permeable membrane packaging material that is less than 2% of the total battery weight. Some embodiments include a hybrid air electrode comprising carbon and an ion insertion material, wherein the mass ratio of ion insertion material to carbon is 0.2 to 0.8. The air electrode may include hydrophobic, porous fibres. In particular embodiments, the air electrode is soaked with an electrolyte comprising one or more solvents including dimethyl ether, and the dimethyl ether subsequently is evacuated from the soaked electrode. In other embodiments, the electrolyte comprises 10-20% crown ether by weight.

US 2015/079485 discloses composite membrane including ion conductive inorganic particles; and a polymer layer, wherein the ion conductive inorganic particles penetrate the polymer layer. Also disclosed is a preparation method thereof, and a lithium-air battery including the composite membrane.

US 2015/140452 discloses a metal-air battery including: a negative electrode metal layer; a negative electrode electrolyte layer disposed on the negative electrode metal layer; a positive electrode layer disposed on the negative electrode electrolyte layer, the positive electrode layer comprising a positive electrode material which is capable of using oxygen as an active material; and a gas diffusion layer disposed on the positive electrode layer, wherein the negative electrode electrolyte layer is between the negative electrode metal layer and the positive electrode layer; wherein the negative electrode metal layer, the negative electrode electrolyte layer, and the positive electrode layer are disposed on the gas diffusion layer so that the positive electrode layer contacts a lower surface and an opposite upper surface of the gas diffusion layer, and wherein one side surface of the gas diffusion layer is exposed to an outside.

### SUMMARY OF THE INVENTION

Provided is a composite cathode and a cathode-membrane assembly. Also provided is an electrochemical cell including the cathode-membrane assembly, as well as methods of preparing the cathode-membrane assembly.

According to an aspect of the invention, a composite cathode for a metal air cell is provided in accordance with claim 1.

According to another aspect of the invention, a cathode-membrane assembly is provided in accordance with claim 6.

According to another aspect of the invention, an electrochemical metal air cell is provided in accordance with claim 14.

According to another aspect of the invention, a method of preparing the cathode-membrane assembly is provided in accordance with claim 18.

Additional aspects will be set forth in part in the description which follows and, in part, will be apparent from the description, or may be learned by practice of the presented exemplary embodiments.

### BRIEF DESCRIPTION OF THE DRAWINGS

These and/or other aspects will become apparent and more readily appreciated from the following description of the exemplary embodiments, taken in conjunction with the accompanying drawings in which:
FIGS. 1 and 2 are schematic diagrams of composite cathodes according to exemplary embodiments;
FIGS. 3 to 7 are schematic diagrams of cathode-membrane assemblies according to exemplary embodiments;
FIG. 8 is a schematic diagram of an electrochemical cell according to an exemplary embodiment;
FIG. 9 is a schematic diagram of an electrochemical cell according to another exemplary embodiment;
FIG. 10 is a schematic diagram of an electrochemical cell according to yet another exemplary embodiment;
FIGS. 11A to 11H are diagrams describing a method of preparing a cathode-membrane assembly, according to an exemplary embodiment;
FIG. 12 is a graph of voltage (volts, V) versus capacity (milliampere hours, mAh) which shows discharge capacities of the lithium air cells manufactured in Examples 1 and 2 and Comparative Examples 1 and 2; and
FIG. 13 is a graph of voltage (V) versus capacity (mAh) which shows a discharge capacity of a lithium air cell manufactured in Example 3.

### DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of" when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third," etc. may be used herein to describe various elements, components, regions, layers, and/or sections, these elements, components, regions, layers, and/or sections should not be limited by these terms. These terms are only used to distinguish one element, component, region, layer or section from another element, component, region, layer, or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" can mean within one or more standard deviations, or within ± 30%, 20%, 10%, or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, according to exemplary embodiments, a composite cathode for a metal air cell, a cathode-membrane assembly, an electrochemical metal air cell, and a method of preparing the cathode-membrane assembly will be described in more detail.

A composite cathode according to exemplary embodiments includes a layer including porous particles; and a first electrolyte disposed between the porous particles of the layer of porous particles. The first electrolyte is disposed on at least a portion of a surface of the layer including porous particles.

The layer including porous particles may have a first surface and an opposite second surface. The first electrolyte may extend from the first surface of the layer including porous particles to the second surface of the layer including porous particles, and may be disposed on at least a portion of the first surface and at least a portion of the second surface.

In the composite cathode, the first electrolyte is disposed between the porous particles in the layer including porous particles and may be disposed on at least a portion of the first surface and/or the second surface of the layer including porous particles, thereby reducing an interfacial resistance between the composite cathode and other electrochemical cell components, for example, an electrolyte film. As a result, in an electrochemical cell including the composite cathode, a discharge capacity, and a specific energy may be improved.

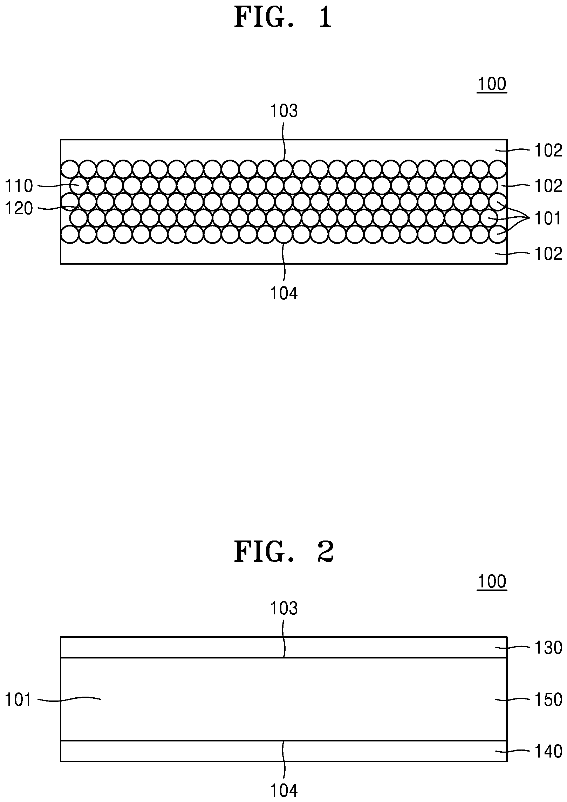

Referring to FIG. 1, a composite cathode 100 may include a layer of porous particles 101 that includes a plurality of porous particles 110 that are substantially close-packed together and which form a layered structure. A first electrolyte 102 is disposed in spaces 120 between the porous particles 110. The first electrolyte 102 may extend from a first surface 103 of the layer of porous particles 101 to a second surface 104 opposite the first surface 103, and the first electrolyte 102 may be disposed on at least a portion of the first surface 103 and/or the second surface 104 of the layer of porous particles 101.

For example, the composite cathode 100 may be prepared by disposing an electrolyte layer on opposite surfaces of a free standing film including porous particles and pressing the free standing film and the electrolyte layers together. Therefore, the composite cathode 100 may be prepared by permeating at least a portion of the first electrolyte 102 into the spaces 120 between the porous particles 110 of the layer of porous particles first 101.

For example, referring to FIG. 1, within the composite cathode 100 the layer of porous particles 101 may be fully impregnated by disposing the first electrolyte 102 such that the first surface 103 and the second surface 104 of the layer of porous particles 101 are fully covered or coated with the first electrolyte 102.

Alternatively, although not illustrated, a portion of the first surface 103 and/or the second surface 104 of the layer of porous particles 101 may be exposed to the outside of the composite cathode 100 by disposing the first electrolyte 102 on only a portion of the first surface 103 and/or the second surface 104 of the layer of porous particles 101.

Referring to FIG. 1, in the composite cathode 100, a weight ratio of the porous particles 110 to the first electrolyte is higher than 1:3.7. That is, in the composite cathode 100, the first electrolyte is limited to less than 370 parts by weight based on 100 parts of the porous particles 110, so that a content of the porous particles 110 included in the composite cathode 100 may be relatively increased. Accordingly, by increasing the amount of porous particles in the composite electrode, an electrochemical cell including the composite cathode 100 may have an improved specific energy. For example, in the composite cathode 100, the weight ratio of the porous particles 110 to the first electrolyte may be higher than or equal to about 1:3.5. For example, in the composite cathode 100, the weight ratio of the porous particles 110 to the first electrolyte may be higher than or equal to about 1:3.0. For example, in the composite cathode 100, the weight ratio of the porous particles 110 to the first electrolyte may be higher than or equal to about 1:2.5. For example, in the composite cathode 100, the weight ratio of the porous particles 110 to the first electrolyte may be higher than or equal to about 1:2.0. For example, in the composite cathode 100, the weight ratio of the porous particles 110 to the first electrolyte may be higher than or equal to about 1:1.5. For example, in the composite cathode 100, the weight ratio of the porous particles 110 to the first electrolyte may be higher than or equal to about 1:0.1. For example, in the composite cathode 100, the weight ratio of the porous particles 110 to the first electrolyte may be higher than or equal to about 1:0.5. For example, in the composite cathode 100, the weight ratio of the porous particles 110 to the first electrolyte may be in the range of about 1:1.3 to about 1:2.7, but is not limited to the range, and the composition ratio of the porous particles 110 to the first electrolyte may be appropriately adjusted to fall within a range in which the electrochemical cell including the composite cathode 100 has an improved specific energy.

In a metal air cell including an anode, a cathode including porous particles, and a separator including a liquid electrolyte disposed between the anode and the cathode, the weight of the liquid electrolyte can be greater than or equal to about 10 times the weight of the porous particles. In a metal air cell including a liquid electrolyte, an excessive amount of electrolyte is used relative to an amount of carbon-based material included in the metal air cell. Consequently, the electrolyte takes up a significant proportion of the volume of the metal air cell, resulting in a reduction in a discharge capacity and a specific energy of the metal air cell. Thus, in a metal air cell including the liquid electrolyte, a weight ratio of the porous particles in the cathode (or in a cathode section) to the liquid electrolyte may exceed about 1:3.7.

In addition, when a metal air cell includes a solid electrolyte, it is difficult to implement a cathode having a weight ratio of porous particles to a first electrolyte which is higher than about 1:3.7. For example, when carbon-based porous particles and a polyelectrolyte are mixed in a weight ratio of higher than about 1:3.7, the resulting mixture may crack during a molding process. Therefore, it is very difficult to prepare a film-shaped cathode.

Referring to FIG. 1, in the composite cathode 100, the first electrolyte may have a concentration gradient in a direction from the first surface 103 of the layer of porous particles 101 to the second surface 104 opposite the first surface 103. That is, the first electrolyte may have a concentration gradient such that the first electrolyte is not homogeneously distributed in the composite cathode 100, but is instead distributed inhomogeneously in the composite cathode. The first electrolyte having the concentration gradient may improve the charge/discharge characteristics of the electrochemical cell including the composite cathode 100. The concentration gradient of the first electrolyte may be continuous or discontinuous. For example, the concentration gradient of the first electrolyte may be continuously or discontinuously changed from the first surface 103 of the layer of porous particles 101 and the second surface 104 of layer of porous particles 101.

For example, referring to FIG. 1, in the composite cathode 100, a concentration of the first electrolyte at a middle point, which is equidistant from the first surface 103 and the second surface 104, may be less than a concentration of the first electrolyte at each of the first surface 103 and the second surface 104. That is, the first electrolyte may have a U-shaped or V-shaped concentration gradient in which the concentration of the first electrolyte decreases and then increases in a thickness direction (e.g., y-direction) of the composite cathode 100. In the composite cathode 100, a profile of the concentration gradient in the first electrolyte may be symmetric with respect to the middle point equidistant from the first surface 103 and the second surface 104 of the layer of porous particles 101. In the composite cathode 100, the concentration of the first electrolyte may be the greatest at each of the first surface 103 and the second surface 104 of the layer of porous particles 101, and the concentration of the first electrolyte may be the lowest at any point between the first surface 103 and the second surface 104 of the layer of porous particles 101. For example, the first electrolyte may not be present at a certain point between the first surface 103 and the second surface 104 of the layer of porous particles 101, such that the concentration of the first electrolyte at the certain point is zero. In the composite cathode 100, the concentration of the first electrolyte at the middle point equidistant between the first surface 103 and the second surface 104 of the layer of porous particles 101 may be less than the concentration of the first electrolyte at each of the first surface 103 and the second surface 104 of the layer of porous particles 101, thereby reducing an interfacial resistance between the composite cathode and other components of the electrochemical cell, for example, between the composite cathode and an electrolyte film. For example, in the composite cathode 100, the content of the first electrolyte permeating into the composite cathode 100 may be adjusted by disposing the electrolyte layers on both surfaces of the free standing film including porous particles 110 and adjusting a force used to press the free standing film and the electrolyte layers together.

The composite cathode 100 may have a multi-layer structure that includes two or more layers. For example, the composite cathode 100 may have a two-layer structure, a three-layer structure, a four-layer structure, a five-layer structure, or the like. In a composite cathode 100 having a multi-layer structure, a distribution of the porous particles 110 and the concentration of the first electrolyte may be easily adjusted in the composite cathode 100 by adjusting a composition of each of the layers.

Referring to FIG. 2, a composite cathode 100 may have a multi-layer structure that includes three layers. The composite cathode 100 may include a first cathode layer 130 disposed on the first surface 103 of a layer of porous particles 101; a second cathode layer 140 disposed on the second surface 104 of the layer of porous particles 101; and a third cathode layer 150 that is disposed between the first cathode layer 130 and the second cathode layer 140 and which includes the layer of porous particles 101 and the first electrolyte. For example, the composite cathode 100 may be prepared to have a multi-layer structure in which the first cathode layer 130 is disposed on a first surface of the third cathode layer 150, and the second cathode layer 140 is disposed on an opposite second surface of the third cathode layer 150.

Referring to FIG. 2, in the composite cathode 100, the first and second cathode layers 130 and 140 may include the first electrolyte. That is, the first and second cathode layers 130 and 140 include the first electrolyte but may not include the porous particles 110.

Referring to FIG. 2, in the composite cathode 100, the third cathode layer 150 may include the porous particles 110 (not illustrated) and the first electrolyte. For example, an electrolyte film including the first electrolyte may be respectively disposed on the first surface of the third cathode layer 150 including a plurality of porous particles 110 (not illustrated) which are close-packed, and the opposite second surface, and the resultant structure may be pressed to allow at least a portion of the first electrolyte to permeate into spaces between the plurality of porous particles 110. As a result, the composite cathode 100 may be prepared to include the third cathode layer 150 that includes the plurality of porous particles 110 (not illustrated) and the first electrolyte; and the first and second cathode layers 130 and 140 that are respectively disposed on the first surface and the opposite second surface of the third cathode layer 150.

Referring to FIG. 2, in the composite cathode 100, a thickness of the first cathode layer 130 and/or the second cathode layer 140 may be in the range of about 1 micrometer (µm) to about 200 µm, but is not limited to the range. The thickness of the first cathode layer 130 and/or the second cathode layer 140 may be appropriately changed to be within a range which is suitable to provide an electrochemical cell including the composite cathode 100 with an improved energy density and/or specific energy. For example, the thickness of the first cathode layer 130 and/or the second cathode layer 140 may be in the range of about 1 µm to about 100 µm. For example, the thickness of the first cathode layer 130 and/or the second cathode layer 140 may be in the range of about 1 µm to about 50 µm. For example, the thickness of the first cathode layer 130 and/or the second cathode layer 140 may be in the range of about 1 µm to about 20 µm. For example, the thickness of the first cathode layer 130 and/or the second cathode layer 140 may be in the range of about 1 µm to about 10 µm.

Referring to FIG. 2, in the composite cathode 100, a thickness of the third cathode layer 150 may be in the range of about 1 µm to about 200 µm, but is not limited to this range. The thickness of the third cathode layer 150 may be appropriately changed to fall within a range which is suitable to provide the electrochemical cell including the composite cathode 100 with improved energy density and/or specific energy. For example, the thickness of the third cathode layer 150 may be in the range of about 10 µm to about 100 µm. For example, the thickness of the third cathode layer 150 may be in the range of about 20 µm to about 50 µm. For example, the thickness of the third cathode layer 150 may be in the range of about 30 µm to about 50 µm.

Referring to FIG. 2, a thickness of the composite cathode 100 may be in the range of about 3 µm to about 600 µm, but is not limited to the range. The thickness of the composite cathode 100 may be appropriately changed to be within a range which is suitable to provide the electrochemical cell including the composite cathode 100 with improved energy density and/or specific energy.

Referring to FIGS. 1 and 2, the porous particles 110 included in the composite cathode 100 are conductive particles. Examples of the carbon-based particles may include at least one selected from carbon black, graphite, graphene, activated carbon, and a carbon fiber. Specifically, the carbon-based particles may have a nanostructure. In the present disclosure, "nanostructure" refers to a particle having a dimension of nanosized (i.e. nanoscale) level. For example, particles having the "nanostructure" may have at least one dimension (e.g., a diameter) of about 1 nanometer (nm) to less than about 1000 nm. Examples of the carbon-based particles having the nanostructure may include at least one selected from carbon nanoparticles, carbon nanotubes, carbon nanofibers, carbon nanosheets, carbon nanorods, and carbon nanobelts, but are not limited thereto. The carbon-based particles may include any suitable carbon-based particles, as long as the carbon-based particles are nanoparticles. The carbon-based particles may also have a microstructure in addition to the nanostructure. In the present disclosure, "microstructure" refers to a particle having a dimension on a micrometer scale. For example, particles having a microstructure have at least one dimension of about 1 µm to less than about 1000 µm. Examples of the carbon-based particles may have various structures such as particles, tubes, fibers, sheets, rods, and belts, which have a micro size.

Since the composite cathode 100 includes the carbon-based particles as the porous particles 110, porosity may be introduced to the composite cathode 100. Therefore, the composite cathode 100 may be porous. Since the carbon-based particles are porous, a contact area between the carbon-based particles and the first electrolyte may be increased. In addition, oxygen may be easily supplied and diffused into the composite cathode 100, and a space in which products generated during a charging/discharging are attached, may be increased.

Referring to FIGS. 1 and 2, the composite cathode 100 may include a catalyst for oxidizing/reducing oxygen. Examples of the catalyst may include at least one selected from a noble metal-based catalyst such as platinum, gold, silver, palladium, ruthenium, rhodium, and osmium; an oxide-based catalyst such as manganese oxide, iron oxide, cobalt oxide, and nickel oxide; and an organic metal-based catalyst such as cobalt phthalocyanine, but is not limited thereto. The catalyst may include any suitable catalyst, as long as the catalyst is applicable as a catalyst for oxidizing/reducing oxygen.

The catalyst may be supported on a carrier. Examples of the carrier may include at least one selected from an oxide carrier, a zeolite carrier, a clay mineral carrier, and a carbonaceous carrier. Examples of the oxide carrier may include an oxide including at least one metal selected from aluminum (Al), cerium (Ce), praseodymium (Pr), samarium (Sm), europium (Eu), terbium (Tb), thulium (Tm), ytterbium (Yb), antimony (Sb), bismuth (Bi), vanadium (V), chromium (Cr), manganese (Mn), iron (Fe), cobalt (Co), nickel (Ni), copper (Cu), niobium (Nb), molybdenum (Mo), zirconium (Zr), titanium (Ti) silicon (Si), and tungsten (W). Examples of the carbonaceous carrier may include at least one selected from carbon black such as ketjen black, acetylene black, or channel black, graphite such as natural graphite, artificial graphite, or expanded graphite, activated carbon, and a carbon fiber, but are not limited thereto. The carbonaceous carrier may include any suitable material, as long as the material is applicable as a carbonaceous carrier.

Referring to FIGS. 1 and 2, in the composite cathode 100, the layer of porous particles 101 may further include a binder. Since the layer of porous particles 101 further includes the binder, the porous particles 110 may be bound to one another by the binder. Therefore, the layer of porous particles 101 having the layered structure may constitute a free standing film.

Examples of the binder included in the layer of porous particles 101 may include at least one selected from a thermoplastic resin and a thermosetting resin. Examples of the binder may include at least one selected from polyethylene, polypropylene, polytetrafluoroethylene (PTFE), polyvinylidene fluoride (PVDF), styrene-butadiene rubber, a tetrafluoroethylene-perfluoroalkyl vinyl ether copolymer, a vinylidene fluoride hexafluoropropylene copolymer, a vinylidene fluoride/chlorotrifluoroethylene copolymer, an ethylene-tetrafluoroethylene copolymer, a polychloro-trifluoroethylene copolymer, a vinylidene fluoride-pentafluoro propylene copolymer, a propylene-tetrafluoroethylene copolymer, an ethylene-chloro-trifluoroethylene copolymer, a vinylidene fluoride-hexafluoropropylene-tetrafluoroethylene copolymer, a vinylidene fluoride-perfluoroalkyl vinyl ether-tetrafluoroethylene copolymer, and an ethylene-acrylic acid copolymer, which can be used solely or in combination. However, the binder is not limited thereto and may include any suitable material, as long as the material is applicable as a binder.

Referring to FIGS. 1 and 2, in the layer of porous particles 101 of the composite cathode 100, the weight ratio of the porous particles 110 to the binder may be higher than about 1:0.5. That is, the layer of porous particles 101 may include less than or equal to about 50 parts by weight of the binder, with respect to about 100 parts of the porous particles 110. For example, in the composite cathode 100, the weight ratio of the porous particles 110 to the binder may be in the range of about 1:0.1 to about 1:0.2 based on weight, but is not limited to this range. The weight ratio of the porous particles 110 to the binder may be appropriately changed to fall within a range in which the layer of porous particles 101 is able to form the free standing structure, and the electrochemical cell including the composite cathode 100 has improved energy density and/or specific energy.

Referring to FIGS. 1 and 2, in the composite cathode 100, the first electrolyte includes a solid electrolyte and may further include a liquid electrolyte. In addition, the first electrolyte may include at least one selected from a plurality of solid electrolytes and a plurality of liquid electrolytes.

The solid electrolyte refers to an electrolyte that maintains a free standing shape at room temperature. The liquid electrolyte refers to a flowable electrolyte which is not free standing at room temperature and for which a shape is determined by a shape of a container holding the liquid electrolyte. Both the solid electrolyte and the liquid electrolyte have lithium ion conductivity.

Referring to FIGS. 1 and 2, the composite cathode 100 may additionally include the liquid electrolyte. Since the composite cathode 100 includes the porous particles 110, the binder, and the like, the composite cathode 100 may be in a solid state or a gel state at room temperature. As a result, the composite cathode 100 including the liquid electrolyte may constitute the free standing film.

Referring to FIGS. 1 and 2, the composite cathode 100 includes the solid electrolyte as the first electrolyte. Examples of the solid electrolyte may include at least one selected from a solid electrolyte including a polymeric ionic liquid (PIL), a solid electrolyte including a PIL and a lithium salt, a solid electrolyte including an ion conductive inorganic material, and a solid electrolyte including an electron-conductive polymer, but are not limited thereto. The solid electrolyte may include any suitable material, as long as the material is applicable for use as an electrolyte for a cathode.

The solid electrolyte further includes a lithium salt. Examples of the lithium salt include at least one selected from LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(CyF_{2y+1}SO₂) (where each of x and y is a natural number from about 1 to about 30), LiCI, and Lil, but are not limited thereto. The lithium salt may include any suitable material, as long as the material is applicable for use as a lithium salt for a solid electrolyte.

The PIL included in the solid electrolyte may include a repeating unit that includes: i) at least one selected from an ammonium cation, a pyrrolidinium cation, a pyridinium cation, a pyrimidinium cation, an imidazolium cation, a piperidinium cation, a pyrazolium cation, an oxazolium cation, a pyridazinium cation, a phosphonium cation, a sulfonium cation, and a triazole cation; and includes ii) at least one selected from BF₄⁻, PF₆⁻, AsF₆⁻, SbF₆⁻, AlCl₄⁻, HSO₄⁻, ClO₄-, CH₃SO₃⁻, CF₃CO₂⁻, (CF₃SO₂)₂N⁻, Cl⁻ , Br, I⁻, BF₄⁻ , SO₄⁻, PF₆⁻, ClO₄⁻, CF₃SO₃⁻, CF₃CO₂⁻, (C₂F₅SO₂)₂N⁻, (C₂F₅SO₂)(CF₃SO₂)N⁻, NO₃⁻, Al₂Cl₇⁻, ASF₆⁻, SbF₆⁻, CF₃COO⁻, CH₃COO⁻, CF₃SO₃⁻, (CF₃SO₂)₃C⁻, (CF₃CF₂SO₂)₂N⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, (O(CF₃)₂C₂(CF₃)₂O)₂PO⁻, and (CF₃SO₂)₂N⁻.

Examples of the PIL may include at least one selected from poly(diallyldimethylammonium) bis(trifluoromethanesulfonyl)imide (DAM TFSI), 1-Allyl-3-methylimidazolium bis(trifluoromethylsulfonyl)imide, and poly((N-methyl-N-propylpiperidinium bis(trifluoromethanesulfonyl)imide).

Examples of the ion conductive inorganic material may include at least one selected from a glassy or amorphous metal ion conductor, a ceramic active metal ion conductor, and a glass-ceramic active metal ion conductor, but are not limited thereto. The ion conductive inorganic material may include any suitable material, as long as the material is applicable for use as an ion conductive inorganic material. The ion conductive inorganic material may be an ion conductive particle.

Examples of the ion conductive inorganic material may include at least one selected from BaTiO₃, Pb(Zr,Ti)O₃ (PZT), Pb₁₋ₓLaₓZr_{1-y}TiyO₃ (PLZT, where 0<x<1, and 0<y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, SiC, lithium phosphate (Li₃PO₄), lithium titanium phosphate (LiₓTi_{y}(PO₄)₃, where 0<x<2, and 0<y<3), lithium aluminum titanium phosphate (LiₓAl_{y}Tiz(PO₄)₃, where 0<x<2, 0<y<1, and 0<z<3), Li_{1+x+y}(Al, Ga)ₓ(Ti, Ge)₂₋ₓSiyP_{3-y}O₁₂ (where 0<x<1, and 0<y<1), lithium lanthanum titanate (LiₓLa_{y}TiO₃, where 0<x<2, and 0<y<3), lithium germanium thiophosphate (LiₓGe_{y}P_{z}S_{w}, where 0<x<4, 0<y<1, 0<z<1, and 0<w<5), lithium nitride-based glass (LiₓN_{y}, where 0<x<4, and 0<y<2), SiS₂(LiₓSi_{y}S_{z}, where 0<x<3, 0<y<2, and 0<z<4), P₂S₅-based glass (LiₓP_{y}S_{z}, where 0<x<3, 0<y<3, and 0<z<7), Li₂O, LiF, LiOH, Li₂CO₃, LiAlO₂, Li₂O-Al₂O₃-SiO₂-P₂O₅-TiO₂-GeO₂-based ceramics, gamet-based ceramics, and Li₃₊ₓLa₃M₂O₁₂ (where M is selected from tellurium (Te), niobium (Nb), and zirconium (Zr)).

The ion conductive polymer means a polymer that includes an ion conductive repeating unit as a main chain or a side chain. The ion conductive repeating unit may include any unit capable of ion conductivity. For example, the ion conductive repeating unit may include an alkylene oxide unit such as ethylene oxide or a hydrophilic unit.

Examples of the ion conductive repeating unit include at least one selected from an ether-based monomer, an acryl-based monomer, a methacryl-based monomer, and a siloxane-based monomer.

Specifically, examples of the ion conductive polymer may include at least one selected from polyethylene oxide, polypropylene oxide, polymethyl methacrylate, polyethyl methacrylate, polydimethylsiloxane, polyacrylic acid, polymethacrylic acid, polymethyl acrylate, polyethyl acrylate, poly(2-ethylhexyl acrylate), poly butyl methacrylate, poly(2-ethylhexyl methacrylate), poly(decyl acrylate), and polyethylene vinyl acetate.

Additional examples of the ion conductive polymer may include at least one selected from a polyethylene (PE) derivative, polyethylene oxide, a polyethylene oxide (PEO) derivative, a polypropylene oxide (PPO) derivative, polyvinylpyrrolidone, polyvinyl alcohol, polyvinyl sulfone, a phosphate ester polymer, polyester sulfide, polyvinylidene fluoride (PVdF), and a polymer including an ionic dissociable group such as lithium-exchanged Nafion®, but are not limited thereto. The ion conductive polymer may include any suitable material, as long as the material is applicable for use as an ion conductive polymer in the art.

In particular, examples of the ion conductive polymer included in the solid electrolyte may include at least one selected from polyethylene oxide (PEO), polyvinyl alcohol (PVA), polyvinylpyrrolidone (PVP), and polyvinyl sulfone.

A cathode-membrane assembly according to exemplary embodiments may include a composite cathode and an ion conductive composite membrane disposed on a surface of the composite cathode.

Since the cathode-membrane assembly includes the composite cathode, in an electrochemical cell including the cathode-membrane assembly 300, a discharge capacity and an energy density and/or specific energy of the electrochemical cell may be improved.

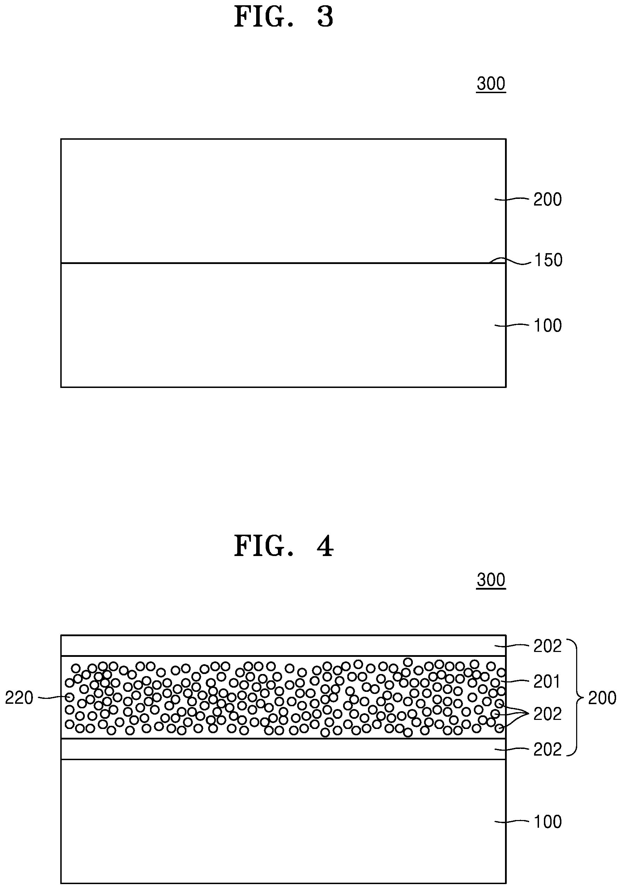

Referring to FIG. 3, a cathode-membrane assembly 300 includes the composite cathode 100 and an ion conductive composite membrane 200 disposed on a surface 105 of the composite cathode 100.

Referring to FIG. 4, in a cathode-membrane assembly 300, an ion conductive composite membrane 200 may include a porous membrane 201 that includes a plurality of pores 220. A second electrolyte 202 is disposed in spaces defined by the plurality of pores 220 of the porous membrane 201. The second electrolyte 202 may extend from a first surface 203 of the porous membrane 201 to a second surface 204 opposite to the first surface 203, and the second electrolyte 202 may be disposed on at least a portion of the first surface 203 and/or the second surface 204 of the porous membrane 201.

For example, referring to FIG. 4, within the ion conductive composite membrane 200 the porous membrane 201 may be fully impregnated by disposing the second electrolyte 202 such that the first surface 203 and/or the second surface 204 of the porous membrane 201 are fully covered or coated with the second electrolyte 202.

Alternatively, although not illustrated, a portion of the first surface 203 and/or the second surface 204 of the porous membrane 201 may be exposed to the outside of the ion conductive composite membrane 200 by disposing the second electrolyte 202 only on a portion of the first surface 203 and/or the second surface 204 of the porous membrane 201.

Referring to FIG. 4, in the ion conductive composite membrane 200, a weight ratio of the porous membrane 210 to the second electrolyte may be higher than 1:4.5. That is, in the ion conductive composite membrane 200, the second electrolyte may be present in an amount of less than 450 parts by weight with respect to 100 parts of the porous membrane 210. In the electrochemical cell including the ion conductive composite membrane 200, a specific energy thus may be improved. For example, in the ion conductive composite membrane 200, the weight ratio of the porous membrane 210 to the second electrolyte may be higher than or equal to about 1:4.0. For example, in the ion conductive composite membrane 200, the weight ratio of the porous membrane 210 to the second electrolyte may be higher than or equal to about 1:3.5. For example, in the ion conductive composite membrane 200, the weight ratio of the porous membrane 210 to the second electrolyte may be higher than or equal to about 1:3.0. For example, in the ion conductive composite membrane 200, the weight ratio of the porous membrane 210 to the second electrolyte may be higher than or equal to about 1:2.5. For example, in the ion conductive composite membrane 200, the weight ratio of the porous membrane 210 to the second electrolyte may be higher than or equal to about 1:0.1. For example, in the ion conductive composite membrane 200, the weight ratio of the porous membrane 210 to the second electrolyte may be higher than or equal to about 1:0.5. For example, in the ion conductive composite membrane 200, the weight ratio of the porous membrane 210 to the second electrolyte may be in the range of about 1:2.3 to about 1:4.5 based, but is not limited thereto. The weight ratio of the porous membrane 210 to the second electrolyte may be appropriately adjusted to fall within a range in which the electrochemical cell including the ion conductive composite membrane 200 has an improved specific energy.

Referring to FIG. 4, in the ion conductive composite membrane 200, the second electrolyte may have a concentration gradient in a direction from the first surface 203 of the porous membrane 201 to the second surface 204 opposite the first surface 203. That is, the second electrolyte may have a concentration gradient such that the second electrolyte is not homogeneously distributed in the ion conductive composite membrane 200, but is instead distributed inhomogeneously in the ion conductive composite membrane 200. The second electrolyte having the concentration gradient may improve the charge/discharge characteristics of the electrochemical cell including the ion conductive composite membrane 200. The concentration gradient of the second electrolyte may be continuous or discontinuous. For example, the concentration gradient of the second electrolyte may be continuously or discontinuously changed from the first surface 203 of the porous membrane 201 to the second surface 204 opposite the first surface 203.

For example, referring to FIG. 4, in the ion conductive composite membrane 200, a concentration of the second electrolyte at a middle point which is equidistant between the first surface 203 and the second surface 204 of the porous membrane 201 may be less than a concentration of the second electrolyte at each of the first surface 203 of the porous membrane 201 and the second surface 204 opposite the one surface 103. That is, the second electrolyte may have a U-shaped or V-shaped concentration gradient in which the concentration of the second electrolyte decreases and then increases in a thickness direction (e.g., a y-direction) of the ion conductive composite membrane 200. In the ion conductive composite membrane 200, a profile of the concentration gradient in the second electrolyte may be symmetric with respect to the middle point equidistant from the first surface 203 and the second surface 204 of the porous membrane 201. In the ion conductive composite membrane 200, the concentration of the second electrolyte may be the greatest at each of the first surface 203 of the porous membrane 201 and the second surface 204, and the concentration of the second electrolyte may be least at the middle point equidistant from the first surface 203 and the second surface 204 of the porous membrane 201. For example, the second electrolyte may not be present at a certain point between the first surface 203 and the second surface 204 of the porous membrane 201, such that the concentration of the second electrolyte at the certain point is zero. In the ion conductive composite membrane 200, the concentration of the second electrolyte at the middle point equidistant from the first surface 203 and the second surface 204 of the porous membrane 201 may be less than the concentration of the third electrolyte at each of the first surface 203 and the second surface 204 of the porous membrane 201, thereby reducing an interfacial resistance when the ion conductive composite membrane 200 comes into contact with other electrochemical cell components, such as for example, an electrolyte film.

Referring to FIGS. 3 and 4, in the cathode-membrane assembly 300, a weight ratio of the first electrolyte included in the composite cathode 100 to the second electrolyte included in the ion conductive composite membrane 200 may be in the range of about 2.5:2.2 to about 1.5:3.8, but is not limited thereto. The weight ratio of the first electrolyte to the second electrolyte may be appropriately adjusted to fall within a range in which the electrochemical cell including the cathode-membrane assembly 300 has an improved specific energy. For example, in the cathode-membrane assembly 300, the weight ratio of the first electrolyte included in the composite cathode 100 to the second electrolyte included in the ion conductive composite membrane 200 may be in the range of about 1.5 to about 2.5 : about 2.2 to about 3.8 based on weight. For example, in the cathode-membrane assembly 300, the weight ratio of the first electrolyte included in the composite cathode 100 to the second electrolyte included in the ion conductive composite membrane 200 may be about 2:3.

The ion conductive composite membrane 200 may have a multi-layer structure that includes two or more layers. For example, the ion conductive composite membrane 200 may have a two-layer structure, a three-layer structure, a four-layer structure, a five-layer structure, or the like.

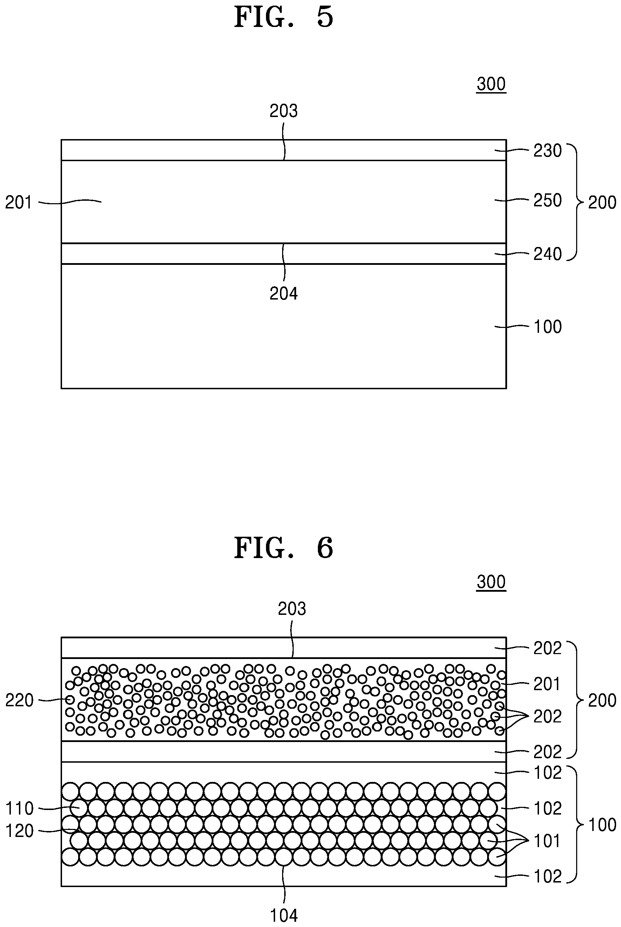

Referring to FIG. 5, an ion conductive composite membrane 200 may include a first composite membrane layer 230 disposed on first surface 203 of a porous membrane 201, a second composite membrane layer 240 disposed on the second surface 204 of the porous membrane 201; and a third composite membrane layer 250 disposed between the first composite membrane layer 230 and the second composite membrane layer 240 and includes the porous membrane 201. For example, the ion conductive composite membrane 200 may be prepared to have a multi-layer structure in which the composite membrane layer 230 is disposed on a first surface 203 of the third composite membrane layer 250, and the second composite membrane layer 240 is disposed on the second surface 204 opposite to the first surface of the third composite membrane layer 250.

Referring to FIG. 5, in the ion conductive composite membrane 200, the first and second composite membrane layers 230 and 240 may each include the second electrolyte. That is, the first and second composite membrane layers 230 and 240 may not include the porous membrane.

Referring to FIG. 5, in the ion conductive composite membrane 200, the third composite membrane layer 250 may include the porous membrane (not illustrated) and the second electrolyte. For example, electrolyte films including the second electrolyte may be respectively disposed on the first surface of the third composite membrane layer 250 including a porous membrane (not illustrated) and the second surface opposite to the first surface, and the electrolyte films and the third composite membrane layer 250 may be pressed to allow at least a portion of the second electrolyte to permeate into pores of the porous membrane (not illustrated). As a result, the ion conductive composite membrane 200 may be prepared to include the third composite membrane layer 250 that includes the porous membrane (not illustrated) and the second electrolyte, and the first and second composite membrane layers 230 and 240 are respectively disposed on the first surface and the second surface of the third composite membrane layer 250, and include the second electrolyte.

Referring to FIG. 5, in the ion conductive composite membrane 200, a thickness of the first composite membrane layer 230 and/or the second composite membrane layer 240 may be in the range of about 1 µm to about 200 µm but is not limited thereto. The thickness of the first composite membrane layer 230 and/or the second composite membrane layer 240 may be appropriately adjusted to fall within a range in which the electrochemical cell including the ion conductive composite membrane 200 has an improved energy density. For example, the thickness of the first composite membrane layer 230 and/or the second composite membrane layer 240 may be in the range of about 1 µm to about 100 µm. For example, the thickness of the first composite membrane layer 230 and/or the second composite membrane layer 240 may be in the range of about 1 µm to about 50 µm. For example, the thickness of the first composite membrane layer 230 and/or the second composite membrane layer 240 may be in the range of about 1 µm to about 20 µm. For example, the thickness of the first composite membrane layer 230 and/or the second composite membrane layer 240 may be in the range of about 1 µm to about 12 µm.

Referring to FIG. 5, in the ion conductive composite membrane 200, a thickness of the third composite membrane layer 250 may be in the range of about 1 µm to about 200 µm but is not limited to the range. The thickness of the third composite membrane layer 250 may be appropriately adjusted to fall within a range in which the electrochemical cell including the ion conductive composite membrane 200 has an improved energy density. For example, the thickness of the third composite membrane layer 250 may be in the range of about 10 µm to about 150 µm. For example, the thickness of the third composite membrane layer 250 may be in the range of about 10 µm to about 130 µm. For example, the thickness of the composite membrane layer 250 may be in the range of about 10 µm to about 100 µm.

Referring to FIGS. 3 to 5, in the cathode-membrane assembly 300, the second electrolyte included in the ion conductive composite membrane 200 may be substantially the same as the first electrolyte included in the composite cathode 100. In the cathode-membrane assembly 300, the second electrolyte included in the ion conductive composite membrane 200 may be substantially the same as the first electrolyte included in the composite cathode 100, so that the cathode-membrane assembly 300 including a single electrolyte may be provided. Specific examples of the composition of the second electrolyte may be the same as those mentioned above with reference to the first electrolyte. In addition, the second electrolyte may be different from the first electrolyte.

Referring to FIGS. 3 and 5, the ion conductive composite membrane 200 may be a barrier film which is impermeable to a gas and to water vapor (e.g., moisture). Since the passage of water vapor and a gas such as oxygen through the ion conductive composite membrane 200 is essentially blocked, an anode (not illustrated) adjacent to the ion conductive composite membrane 200 may be prevented from being deteriorated by the oxygen or the moisture. Therefore, the ion conductive composite membrane 200 may function as a protective membrane.

Referring to FIG. 4, the ion conductive composite membrane 200 may be a composite membrane that includes the porous membrane 201 having the plurality of pores 220 and an ion conductive polymer electrolyte disposed within the pores 220. That is, the ion conductive polymer electrolyte may be disposed in the plurality of pores 220 of the porous membrane 210. The ion conductive composite membrane 200 may be prepared by impregnating the second electrolyte 202 into the porous membrane 201 having a plurality of pores 220. Since the second electrolyte 202 is impregnated into a flow path formed by a connection between the plurality of pores 220 which are irregularly arranged within the porous membrane 201, the second electrolyte may be exposed at both surfaces of the porous membrane 201 to provide a transfer path for active metal ions.

Examples of the porous membrane 201 may include at least one selected from a non-woven polymer fabric such as a non-woven polypropylene fabric, a non-woven polyimide fabric, or a non-woven polyphenylene sulfide fabric; and a porous film including an olefin-based resin such as polyethylene, polypropylene, polybutene, or polyvinylchloride, but are not limited thereto. The porous membrane 210 may include any material, as long as the material is a suitable material for use as a porous membrane.

The ion conductive polymer electrolyte disposed in the pores 220 of the porous membrane 210 may be substantially the same as the above-described first electrolyte.

Referring to FIG. 4, the porous membrane 201 included in the ion conductive composite membrane 200 may include a polymer having gas and water vapor (e.g. moisture) barrier characteristics. For example, the porous membrane comprises a polymer which may be impermeable to at least one gas selected from oxygen, nitrogen, and carbon dioxide, and which may also be impermeable to water vapor (e.g., water). For example, the polymer may have a transmission rate to oxygen in a range from about 1000 cm³/m²·day or less, 500 cm³/m²·day or less, 100 cm³/m²·day or less, 50 cm³/m²·day or less, 10 cm³/m²·day or less, or 5 cm³/m²·day or less, as measured at 25°C. The polymer may also have a transmission rate to water vapor of about 500,000 cm³/m²·day or less, 100,000 cm³/m²·day or less, 50,000 cm³/m²·day or less, 10,000 cm³/m²·day or less, 5,000 cm³/m²·day or less, or 1,000 cm³/m²·day or less as measured at 25°C.

Examples of the polymer having the gas and water vapor barrier characteristics may include at least one selected from poly(2-vinyl pyridine), polytetrafluoroethylene, a tetrafluoroethylene-hexafluoropropylene copolymer, polychlorotrifluoroethylene, a perfluoroalkoxy copolymer, a fluorinated cyclic ether, polyethylene oxide diacrylate, polyethylene oxide dimethacrylate, polypropylene oxide diacrylate, polypropylene oxide dimethacrylate, polymethylene oxide diacrylate, polymethylene oxide dimethacrylate, a C4 to C20 polyalkyldiol diacrylate, a C4 to C20 polyalkyldiol dimethacrylate, polydivinylbenzene, polyether, polycarbonate, polyamide, polyester, polyvinyl chloride, polyimide, polycarboxylic acid, polysulfonic acid, polyvinyl alcohol, polysulfone, polystyrene, polyethylene, polypropylene, poly(p-phenylene), polyacetylene, poly(p-phenylene vinylene), polyaniline, polypyrrole, polythiophene, poly(2,5-ethylene vinylene), polyacene, poly(naphthalene-2,6-diyl), polyethylene oxide, polypropylene oxide, polyvinylidene fluoride, a copolymer of vinylidene fluoride and hexafluoropropylene, polyvinyl acetate, poly(vinyl butyral-co-vinyl alcohol-co-vinyl acetate), poly(methyl methacrylate-co-ethyl acrylate), polyacrylonitrile, polyvinyl chloride-co-vinyl acetate, poly(1-vinylpyrrolidone-co-vinyl acetate), polyvinylpyrrolidone, polyacrylate, polymethacrylate, polyurethane, polyvinyl ether, acrylonitrile-butadiene rubber, styrene-butadiene rubber, acrylonitrile-butadiene-styrene rubber, a sulfonated styrene/ethylene-butylene triblock copolymer; a polymer obtained from at least one acrylate monomer selected from ethoxylated neopentyl glycol diacylate, ethoxylated bisphenol A diacrylate, ethoxylated aliphatic urethane acrylate, a C4 to C20 ethoxylated alkylphenol acrylate, and alkyl acrylate; polyvinyl alcohol, polyimide, an epoxy resin, and an acrylic resin. However, the polymer having the gas and water vapor barrier characteristics is not limited thereto and may include any polymer capable of effectively blocking movement of a gas and water vapor.

Alternatively, although not illustrated, the ion conductive composite membrane 200 may be a composite membrane that includes a porous membrane having a plurality of through-holes and the second electrolyte disposed in the through-holes. The porous membrane having the plurality of through-holes may include the polymer having the gas and moisture barrier characteristics. The porous membrane having the plurality of through-holes may differ from the porous membrane 201 having the plurality of pores 220. For example, in the porous membrane having the plurality of through-holes, the plurality of through-holes are disposed in a single direction from a first surface of the porous membrane to the second surface opposite surface and thus connect the first surface and the second surface. A polymer included in the porous membrane having the plurality of through-holes may be substantially the same as the polymer included in the above-described porous membrane 201 having the plurality of pores 220.

At least one selected from a polymer electrolyte film, a porous membrane, and an inorganic solid electrolyte film may be further disposed on a surface of the ion conductive composite membrane 200. Such a configuration may improve the stability and cell life characteristics of the electrochemical cell. The polymer electrolyte film may be an electrolyte film that includes an ion conductive polymer and a lithium salt. The porous membrane may be impregnated by a liquid electrolyte that includes an organic solvent and a lithium salt. The solid electrolyte film may be a solid electrolyte film that includes the above-described ion conductive inorganic material.

Referring to FIG. 6, a cathode-membrane assembly 300 may include a composite cathode 100 and an ion conductive composite membrane 200. The composite cathode 100 may include a layer of porous particles 101 that includes porous particles 110 that are substantially close-packed together and have a layered structure, and a first electrolyte 102 disposed in spaces 120 between the porous particles. The ion conductive composite membrane 200 may be disposed on the composite cathode 100 and may include a porous membrane 201 and a second electrolyte 202 disposed in spaces defined by a plurality of pores 220 of the porous membrane 201. At least one of the first electrolyte 102 and the second electrolyte 202 may be disposed between the layer of porous particles 101 and the porous membrane 201. The first electrolyte 102 may be disposed on at least a portion of the first surface 104 of the layer of porous particles 101. The second electrolyte 202 may be disposed on at least a portion of the first surface 203 of the porous membrane 201.

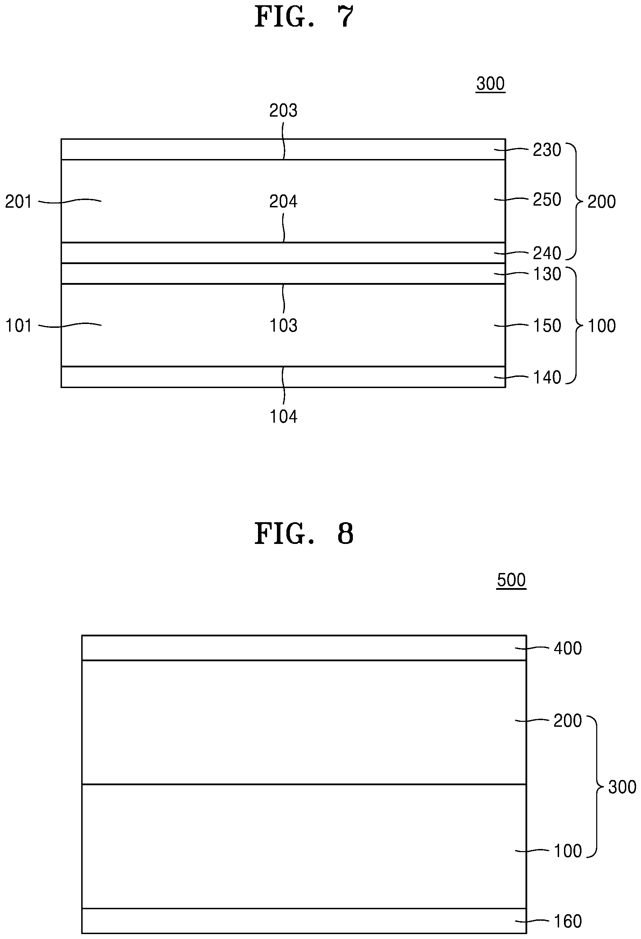

Referring to FIG. 7, a cathode-membrane assembly 300 may include a composite cathode 100 and an ion conductive composite membrane 200. The composite cathode 100 may include a first cathode layer 130 that is disposed on a first surface 103 of a layer of porous particles 101, a second cathode layer 140 that is disposed on a second surface 104 of the layer of porous particles 101, and a third cathode layer 150 that is disposed between the first cathode layer 130 and the second cathode layer 140 and includes the layer of porous particles 101. The ion conductive composite membrane 200 may be disposed on the composite cathode 100 and may include a first composite membrane layer 230 that is disposed on a first surface 203 of a porous membrane 201, a second composite membrane layer 240 that is disposed on a second surface 204 of the porous membrane 201, and a third composite membrane layer 250 that is disposed between the first composite membrane layer 230 and the second composite membrane layer 240 and includes the porous membrane 201. In the cathode-membrane assembly 300, the first cathode layer 130 may include a first electrolyte and the second composite membrane layer 240 may include a second electrolyte. Therefore, when the first electrolyte is substantially the same as the second electrolyte, the first cathode layer 130 and the second composite membrane layer 240 may include substantially similar electrolytes and thus may be indistinguishable from each other. Alternatively, in the cathode-membrane assembly 300, only one of the first cathode layer 130 and the second composite membrane layer 240 may be disposed between the third cathode layer 150 and the third composite membrane layer 250.

An electrochemical cell according to an exemplary embodiment may include the cathode-membrane assembly 300 and an anode disposed on the ion conductive composite membrane 200 of the cathode-membrane assembly 300. Since the electrochemical cell includes the cathode-membrane assembly 300, a discharge capacity and an energy density and/or specific energy may be improved in the electrochemical cell including the cathode-membrane assembly 300.

Referring to FIG. 8, an electrochemical cell 500 may include a cathode-membrane assembly 300 and an anode 400 disposed on a surface of an ion conductive composite membrane 200 included in the cathode-membrane assembly 300.

The anode 400 may include at least one selected from lithium and an alloy thereof. That is, an active metal anode may include at least one selected from lithium and an alloy including lithium as a main component.

A lithium thin film may be used as the anode 400. When the lithium thin film is used as the anode 400, the volume and weight occupied by a collector may be reduced, thereby improving the energy density and/or specific energy of the electrochemical cell 500. Alternatively, the lithium thin film may be disposed on a conductive substrate that is a collector. The lithium thin film may be integrally formed with the collector. Examples of the collector may include at least one selected from stainless steel, copper, nickel, iron, and titanium, but are not limited thereto. The collector may include any metallic substrate, as long as the metallic substrate has excellent conductivity.

The anode 400 may include an alloy of lithium and at least one negative electrode active material. The negative electrode active material may be a metal capable of being alloyed with lithium. Examples of the metal capable of being alloyed with lithium may include at least one selected from silicon (Si), tin (Sn), aluminum (Al), germanium (Ge), lead (Pb), bismuth (Bi), antimony (Sb), a Si-Y' alloy (where Y' includes at least one selected from an alkali metal, an alkali earth metal, a Group 13 element, a Group 14 element, a transition metal, and a rare earth element, and Y' does not include Si), and an Sn-Y' alloy (where Y' includes at least one selected from an alkali metal, an alkali earth metal, a Group 13 element, a Group 14 element, a transition metal, and a rare earth element, , and Y' does not include Sn). Examples of the element Y' may include at least one selected from magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium(ln), titanium (Ti), germanium (Ge), phosphorus (P), arsenic (As), antimony (Sb), bismuth (Bi), sulfur (S), selenium (Se), and tellurium (Te), polonium (Po). For example, a lithium alloy may include at least one selected from a lithium-aluminum alloy, a lithium-silicon alloy, a lithium-tin alloy, lithium-silver alloy, and a lithium-lead alloy.

A thickness of the anode 400 may be greater than or equal to about 10 µm. The thickness of the anode 400 may be in the range of about 10 µm to about 20 µm, about 20 µm to about 60 µm, about 60 µm to about 100 µm, about 100 µm to about 200 µm, about 200 µm to about 600 µm, about 600 µm to about 1000 µm, about 1 mm to about 6 mm, about 6 mm to about 10 mm, about 10 mm to about 60 mm, about 60 mm to about 100 mm, or about 100 mm to about 600 mm.

Referring to FIG. 8, the electrochemical cell 500 may further include a gas diffusion layer 160 disposed on a surface of a composite cathode 100 in the cathode-membrane assembly 300. A gas such as air may be diffused through the gas diffusion layer 160 and thus may be supplied to the electrochemical cell 500. The gas diffusion layer 160 may be an electrically conductive layer. When the gas diffusion layer 160 is an electrically conductive layer, the gas diffusion layer 160 may function as a positive electrode collector. The gas diffusion layer 160 may include at least one selected from a porous carbon-based material and a porous metal, but is not limited thereto. The gas diffusion layer 160 may include any suitable material capable of being used as a conductive gas diffusion layer. For example, the porous carbon-based material may include a carbon fiber nonwoven fabric or the like. Since a conductive carbon-based gas diffusion layer has a density lower than a density of a metal, the specific energy of the electrochemical cell 500 may be further improved.

Although not illustrated in FIG. 8, the electrochemical cell 500 may further include a positive electrode collector that is disposed to come into contact with the gas diffusion layer 160 and/or the composite cathode 100. A position at which the positive electrode collector is disposed is not be particularly limited and may be selected according to a shape of the electrochemical cell 500.

The positive electrode collector may include a netlike or mesh-shaped porous body capable of rapidly diffusing oxygen and may include a porous metal plate such as stainless steel, nickel, or aluminum. The positive electrode collector is not limited thereto and may include any material suitable for use as a positive electrode collector in. The positive electrode collector may be covered with an oxidation resistant metal or alloy film.

Although not illustrated in FIG. 8, the electrochemical cell 500 may further include a negative electrode collector that is disposed to come into contact with the anode 400. A position at which the negative electrode collector is disposed is not particularly limited and may be selected according to a shape of the electrochemical cell 500, and to be within a suitable distance from the positive electrode collector such that a short-circuit does not occur between the negative electrode collector and the positive electrode collector.

The negative electrode collector may include a porous metal plate such as stainless steel, nickel, or aluminum, but is not limited thereto. The negative electrode collector may include any material suitable for use as a negative electrode collector.

In the electrochemical cell 500, the cathode-membrane assembly 300 and the anode 400 may include one or more folded portions. Since the cathode-membrane assembly 300 and the anode 400 include one or more folded portions, the electrochemical cell 500 may be easily molded into various shapes.

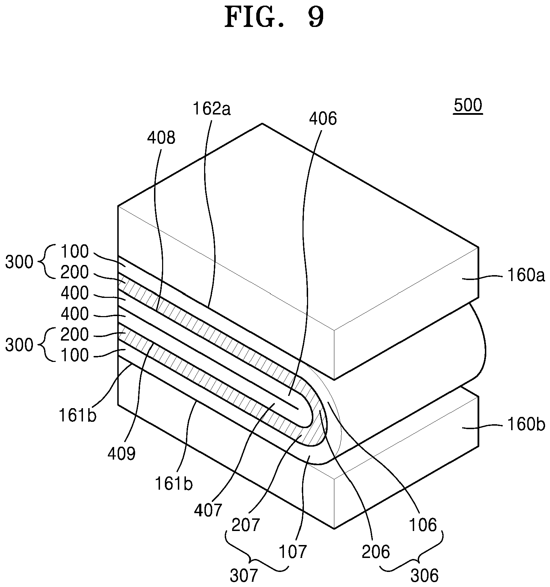

Referring to FIG. 9, in an electrochemical cell 500, a cathode-membrane assembly 300 including a composite cathode 100 and an ion conductive composite membrane 200 may have one or more folded portions 306 and 307, and an anode 400 may have one or more folded portions 406 and 407. In addition, the composite cathode 100 may have one or more folded portions 106 and 107, and the ion conductive composite membrane 200 may have one or more folded portions 206 and 207.

Referring to FIG. 9, in the electrochemical cell 500, the cathode-membrane assembly 300 and the anode 400 may be folded at an angle of about 180° such that at least two portions of the anode 400 overlap each other. An entire first surface 408 of the anode 400 and an entire second surface 409 opposite the first surface 408 may come into contact with a surface of the cathode-membrane assembly 300, so that active metal ions may be transferred to the anode 400. Therefore, the discharge capacity and the energy density and/or specific energy of the electrochemical cell 500 may be improved as compared to a prior art electrochemical cell that has a same weight as the electrochemical cell 500 and is only capable of transferring active metal ions to a single surface of an anode.

The electrochemical cell 500 may include one or more gas diffusion layers. Referring to FIG. 9, the electrochemical cell 500 may include a plurality of gas diffusion layers 160a and 160b that are spaced apart from each other along a thickness direction of the electrochemical cell 500. The composite cathode 100 may be folded at an angle of about 180° so as to come into contact with a first surface 162a of the gas diffusion layer 160a and a first surface 161b of the gas diffusion layer 160b. The surface 161b of the gas diffusion layer 160b faces the surface 162a of the gas diffusion layer 160a. The ion conductive composite membrane 200 may be folded at an angle of about 180° in the same pattern as the composite cathode 100 such that the ion conductive composite membrane 200 comes into contact with the composite cathode 100. The anode 400 may be folded at an angle of about 180° in the same pattern as the ion conductive composite membrane 200 such that the anode 400 comes into contact with the ion conductive composite membrane 200. The anode 400 may be folded at the angle of about 180° such that folded portions 406 and 407 overlap between the plurality of gas diffusion layers 160a and 160b. Although not illustrated in FIG. 9, a plurality of electrochemical cells 500 may be laminated to constitute an electrochemical cell module.

In the electrochemical cell 500, the cathode-membrane assembly 300 and the anode 400 may be folded multiple times in the thickness direction of the electrochemical cell 500 to provide a three-dimensional (3D) electrochemical cell.

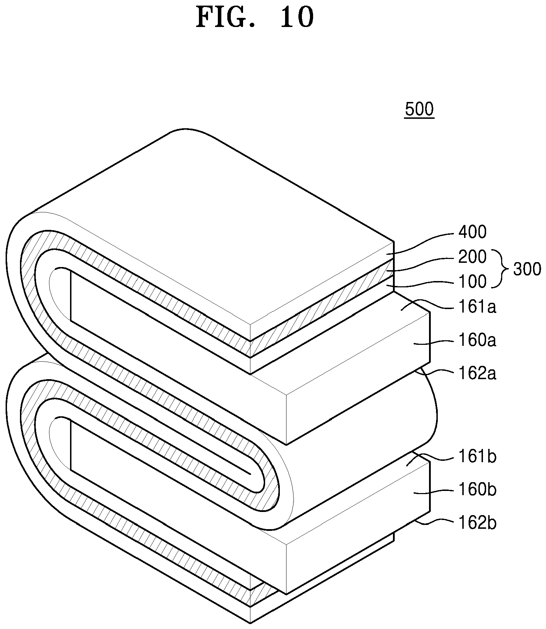

Referring to FIG. 10, in a three-dimensional electrochemical cell 500, a plurality of gas diffusion layers 160a and 160b may be spaced apart from each other in a thickness direction of the three-dimensional electrochemical cell 500. A cathode-membrane assembly 300 may be repeatedly folded at an angle of about 180° such that a composite cathode 100 of the cathode-membrane assembly 300 comes into contact with each of first surfaces 161a and 161b of the plurality of gas diffusion layers 160a and 160b, respectively, and with each of second surfaces 162a and 162b of the plurality of gas diffusion layers 160a and 160b, the second surfaces 162a and 162b being opposite to the first surfaces 161a and 161b. An anode 400 may be repeatedly folded at an angle of about 180° in the same pattern as the cathode-membrane assembly 300 such that the anode 400 comes into contact with an ion conductive composite membrane 200 of the cathode-membrane assembly 300. The anode 400 may be folded at an angle of about 180° such that portions of the anode overlap between the plurality of gas diffusion layers 160a and 160b, and are adjacent to each other. In the three-dimensional electrochemical cell 500, a position of the folds, a number of the folds, and a direction of the folds of the cathode-membrane assembly 300 and the anode 400 may be selected based upon a shape of the three-dimensional electrochemical cell 500 to be manufactured. Although not illustrated in FIG. 10, a plurality of three-dimensional electrochemical cells 500 may be stacked to constitute an electrochemical cell module.

An electrochemical cell may be a metal air cell or a lithium secondary cell.

Referring to FIGS. 9 and 10, the electrochemical cell 500 may be a metal air cell. For example, the electrochemical cell 500 may be a lithium air cell.

In the metal air cell, a cathode using oxygen as a positive electrode active material may include a conductive material. The conductive material may be a porous particle. The cathode of the metal air cell may include a catalyst for oxidizing/reducing oxygen. The cathode of the metal air cell may additionally include a binder. The cathode of the metal air cell may include an ion conductive polymer electrolyte. Specific examples of the conductive material, the binder, and the ion conductive polymer electrolyte included in the metal air cell are provided with reference to the above-described composite cathode 100.

The cathode of the metal air cell may be prepared by, for example, mixing the conductive material, the binder, and the catalyst for oxidizing/reducing oxygen, adding an appropriate solvent to the resulting mixture to prepare a cathode slurry, and applying the prepared slurry on a surface of a substrate to dry the resulting structure. Alternatively, the slurry may be subjected to compression molding on the substrate so as to improve an electrode density. A free standing film may be prepared by separating the cathode from the substrate. The cathode may be prepared by disposing an ion conductive polymer film on each of a first surface and second surface of the cathode having a shape of the free standing film, and pressing the ion conductive polymer films and the cathode. In addition, the cathode of the metal air cell may selectively include lithium oxide. Furthermore, the catalyst for oxidizing/reducing oxygen may be omitted if desired.

An anode of the metal air cell may include at least one selected from an alkali metal (e.g., lithium, sodium, or potassium), an alkaline earth metal (e.g., calcium, magnesium, or barium), a certain transition metal (e.g., zinc), and an alloy thereof.

An ion conductive composite membrane may be disposed between the cathode and the anode of the metal air cell. The ion conductive composite membrane may include a separator and an electrolyte. The ion conductive composite membrane may be substantially the same as the ion conductive composite membrane 200 disposed between the composite cathode 100 and the anode 400 of the electrochemical cell 500 of FIG. 8.

Alternatively, although not illustrated in FIGS. 9 and 10, the electrochemical cell 500 may be a lithium secondary cell. The lithium secondary cell may be, for example, a lithium sulfur secondary cell or a lithium ion secondary cell. The lithium secondary cell may comprise the above-described composite cathode and/or ion conductive composite membrane.

In the lithium sulfur secondary cell, a positive electrode active material in a cathode may include at least one selected from elemental sulfur (Ss) and an elemental sulfur-containing compound. Examples of the elemental sulfur-containing compound may include at least one selected from Li₂Sx (x≥1), Li₂Sx (x≥1) dissolved in a catholyte, an organic sulfur compound, and a carbon-sulfur polymer (C₂Sₓ)ₙ (where x=2.5 to 50, and n≥2). The cathode may include the above-described composite cathode 100 including the layer of porous particles and the first electrolyte. The porous particles in the layer of porous particles may include at least one selected from a porous positive electrode active material and a porous conductive material.

In the lithium sulfur secondary cell, a negative electrode active material of an anode may be a material that is capable of reversibly intercalating/deintercalating or plating/stripping lithium ions. The material capable of reversibly intercalating/deintercalating or plating/stripping lithium ions may include a carbonaceous material, a material which is capable of reversibly reacting with lithium ions to form a lithium-containing compound, a lithium metal or a lithium alloy.

The carbonaceous material may include any carbon-based negative electrode active material that is generally used in the lithium sulfur secondary cell. Representative examples of the carbonaceous material may include at least one selected from crystalline carbon and amorphous carbon. In addition, representative examples of a material which is capable of reversibly reacting with lithium ions to form a lithium-containing compound, may include at least one selected from tin oxide (SnO₂), titanium nitrate, and silicon (Si), and the like, but are not limited thereto. A lithium alloy may include an alloy of lithium and at least one metal selected from sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

In the lithium ion secondary cell, a positive electrode active material of a cathode may include a compound that is capable of reversibly intercalating/deintercalating lithium ions, for example, a lithiated intercalation compound. Examples of the positive electrode active material may include at least one selected from lithium cobalt oxide, lithium nickel cobalt manganese oxide, lithium nickel cobalt aluminum oxide, lithium iron phosphate, and lithium manganese oxide, but are not limited thereto. The positive electrode active material may include any suitable positive electrode active material. The cathode may have the configuration of the above-described composite cathode 100 including the layer of porous particles and the first electrolyte. The porous particles in the layer of porous particles may include at least one selected from a porous positive electrode active material and a porous conductive material.

Examples of the positive electrode active material may include at least one selected from lithium nickel oxide, expressed by formula LiNiO₂; lithium manganese oxide, expressed by formula Li₁₊ₓMn₂₋ₓO₄ (where x is 0 to 0.33), LiMnO₃, LiMn₂O₃, or LiMnO₂; lithium copper oxide, expressed by formula Li₂CuO₂; lithium iron oxide, expressed by formula LiFe₃O₄; lithium vanadium oxide, expressed by formula LiV₃O₈; copper vanadium oxide, expressed by formula Cu₂V₂O₇; vanadium oxide, expressed by formula V₂O₅; lithium nickel oxide, expressed by formula LiNi₁₋ₓMₓO₂ (where M=Co, Mn, Al, Cu, Fe, Mg, B (boron), or Ga, and x=0.01 to 0.3); lithium manganese composite oxide, expressed by formula LiMn₂₋ₓMₓO₂ (where M=Co, Ni, Fe, Cr, Zn or Ta, and x= 0.01 to 0.1), or Li₂Mn₃MO₈ (where M=Fe, Co, Ni, Cu, or Zn); lithium manganese oxide, expressed by formula LiMn₂O₄, in which a portion of the Li atoms are substituted with alkaline earth metal ions; a disulfide compound; and iron molybdenum oxide, expressed by formula Fe₂(MoO₄)₃.

In the lithium ion secondary cell, a negative electrode active material of an anode may include at least one selected from Si, SiOₓ (0<x<2, for example, x is 0.5 to 1.5), Sn, SnO₂, and a silicon-containing metal alloy. Examples of a metal capable of forming the silicon-containing metal alloy, may include at least one selected from Al, Sn, Ag, Fe, Bi, Mg, Zn, In, Ge, Pb, and Ti.

The negative electrode active material may include at least one selected from metals/metalloids capable of being alloyed with lithium, alloys thereof, and oxides thereof. Examples of the metals/metalloids capable of being alloyed with lithium may include at least one selected from Si, Sn, Al, Ge, Pb, Bi, Sb, a Si-Y' alloy (where Y' includes one selected from an alkali metal, an alkali earth metal, a Group 13 element, a Group 14 element, a transition metal, and a rare earth element, and Y does not include Si), an Sn-Y' alloy (where Y' includes one selected from an alkali metal, an alkali earth metal, a Group 13 element, a Group 14 element, a transition metal, and a rare earth element, and does not include Sn), and MnOₓ (0<x2). The element Y' may include one selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, and Po. Examples of oxides of the metals/metalloids capable of being alloyed with lithium may include at least one selected from lithium titanium oxide, vanadium oxide, lithium vanadium oxide, SnO₂, and SiOₓ (0<x<2).

For example, the negative electrode active material may include at least one selected from a Group 13 element, a Group 14 element, and a Group 15 element of the periodic table of the elements

For example, the negative electrode active material may include at least one selected from Si, Ge, and Sn.

The negative electrode active material may include a mixture of a carbon-based material and at least one selected from the above-described silicon, silicon oxides, and silicon-containing metal alloy or may include a complex of the carbon-based material and at least one selected from the above-described silicon, silicon oxides, and silicon-containing metal alloy.

For example, the negative electrode active material may have a simple particle shape and may have a nano-sized nanostructure. For example, the negative electrode active material may have various shapes such as nanoparticles, nanowires, nanorods, nanotubes, and nanobelts.

An electrolyte layer may be disposed between the cathode and the anode of the lithium ion secondary cell. The electrolyte layer may include a separator and an electrolyte. The above-described ion conductive composite membrane 200 disposed between the composite cathode 100 and the anode 400 of the electrochemical cell 500 of FIG. 8, may be used as the electrolyte layer.

A method of preparing a cathode-membrane assembly according to an exemplary embodiment includes providing a porous particle layer; disposing a first electrolyte layer on each of a first surface of the porous particle layer and an opposite second surface of the porous particle layer; preparing a composite cathode by pressing the first electrolyte layers; providing a porous membrane; disposing a second electrolyte layer on each of a first surface of the porous membrane and an opposite second surface of the porous membrane; and preparing a composite membrane by pressing each of the second electrolyte layers in a direction of the porous membrane. The pressing of the first electrolyte layers occurs in a direction toward the porous particle layer, and the pressing of the second electrolyte layers occurs in a direction toward the porous membrane.

Since the cathode-membrane assembly is prepared using the above-described method of preparing the cathode-membrane assembly, an electrolyte distribution may be easily adjusted in both the composite cathode and the composite membrane, and as a result, an electrolyte distribution may be easily adjusted in the cathode-membrane assembly. In addition, since the cathode-membrane assembly is prepared by pressing the various layers, a large area cathode-membrane assembly may be easily manufactured, and as a result, a large area lithium air cell also may be easily manufactured.

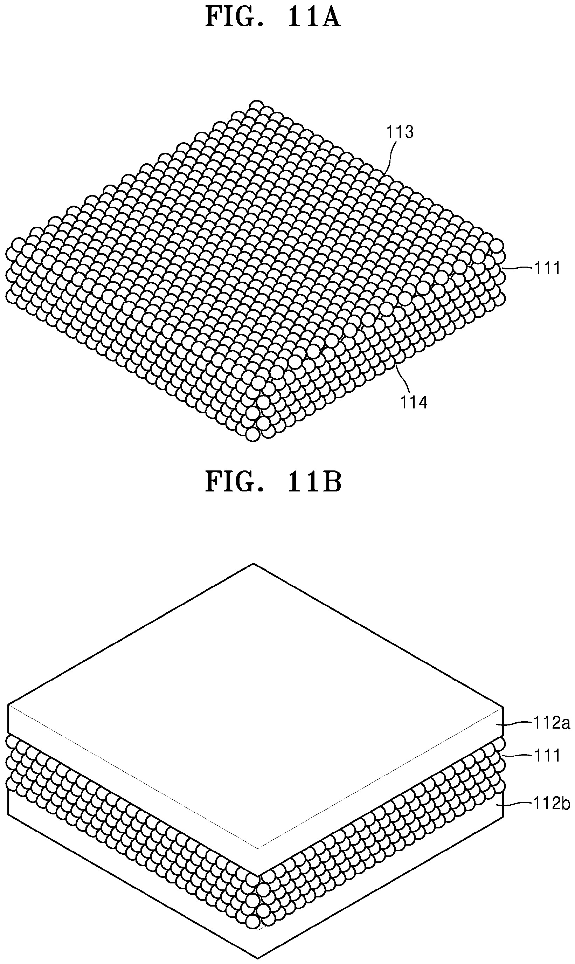

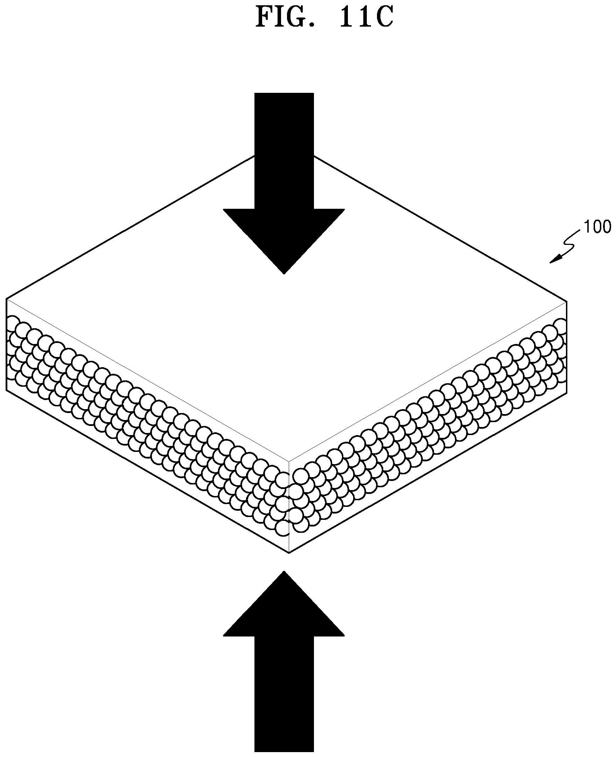

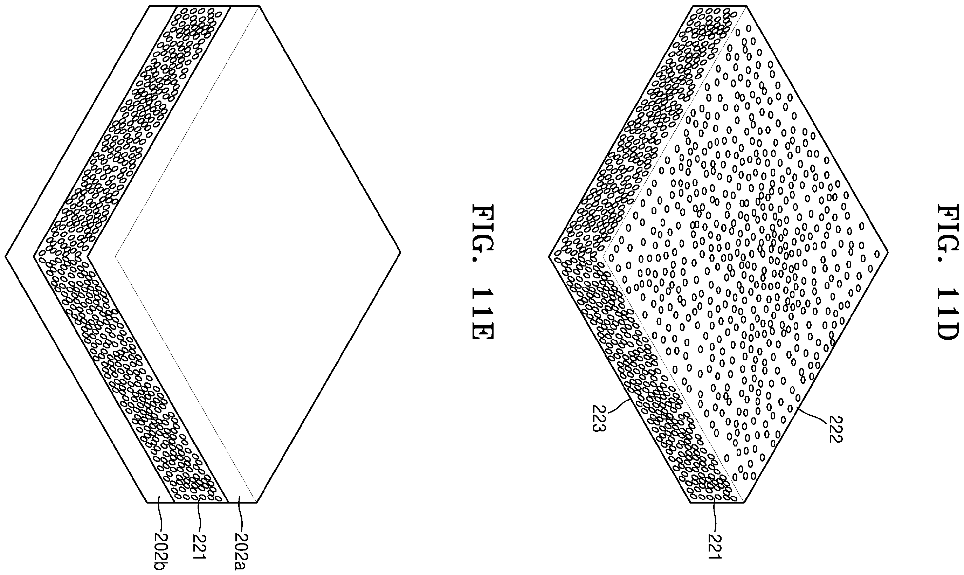

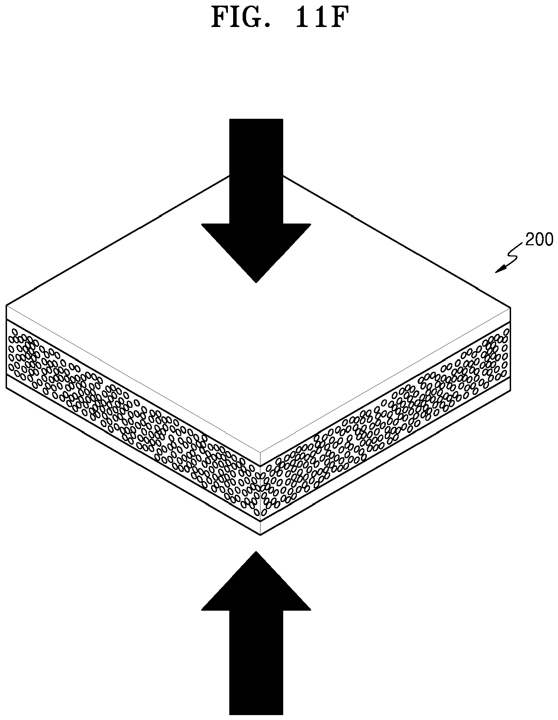

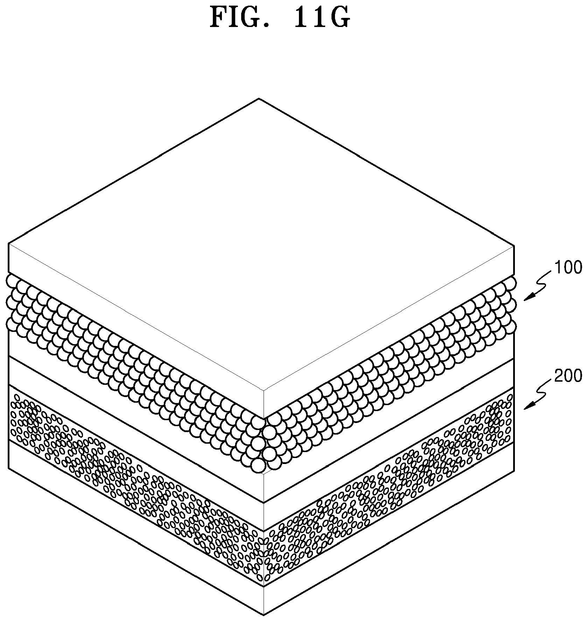

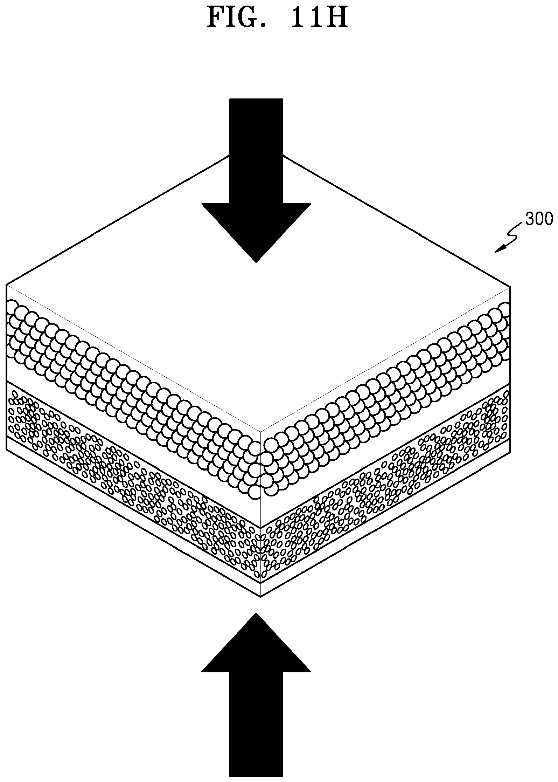

Referring to FIGS. 11A to 11H, a method of preparing a cathode-membrane assembly 300 may include providing a porous particle layer 111 (FIG. 11A); disposing first electrolyte layer 102a and 102b on a first surface 113 of the porous particle layer 111 and on an second surface 114 opposite to the first surface 113 (FIG. 11B), respectively; preparing a composite cathode 100 by pressing each of the first electrolyte layers 102a and 102b in a direction towards the porous particle layer 111 (FIG. 11C); providing a porous membrane 221 (FIG. 11D); disposing second electrolyte layers 202a and 202b on a first surface 222 of the porous membrane 221 and on a second surface 223 opposite the first surface 222 (FIG. 11E); preparing a composite membrane 200 by pressing each of the second electrolyte layers 202a and 202b in a direction towards the porous membrane 221 (FIG. 11F); disposing the composite cathode 100 on the composite membrane 200 (FIG. 11G); and pressing the composite membrane 200 and the composite cathode 100 (FIG. 11H).

Referring to FIG. 11A, the porous particle layer 221 may be a free standing film provided without a support. The porous particle layer 221 may include porous particles and a binder. The porous particle layer 221 may additionally include a catalyst. When the porous particle layer 221 includes the catalyst, the porous particle layer 221 may be referred to as a catalyst layer. Since the porous particle layer 221 is a free standing film, the working efficiency of the porous particle layer 221 may be excellent, and the porous particle layer 221 having a large surface area may be easily prepared.

Referring to FIGS. 11C, 11F, and 11H, the pressing may be hot-pressing but is not limited thereto. The pressing may include any pressing process may be used, as long as the pressing process is applicable as a preparation of a composite membrane and a composite cathode in the art.

Referring to FIGS. 6 and 11H, after pressing the composite membrane 200 and the composite cathode 100, the method of preparing the cathode-membrane assembly 300 may further include quickly cooling the composite membrane 200 and the composite cathode 100. An electrolyte composition may be maintained with an unchanged state in the composite membrane 200 and the composite cathode 100 by quickly cooling the composite membrane 200 and the composite cathode 100. After hot-pressing, through natural cooling, the pressed composite membrane 200 and the composite cathode 100 only can be cooled to a temperature of about 80°C after about 100 minutes. However, when the pressed composite membrane 200 and composite cathode 100 are left at room temperature for a long period of time, the second electrolyte layer 202a on the composite membrane 200 may diffuse into the composite cathode 100. Therefore, the electrolyte composition may be changed in both the composite membrane 200 and the composite cathode 100, and the composite membrane 200 and the composite cathode 100 may not be separated from each other by the first and second electrolyte layers 102 and 202.

Referring to FIG. 11H, after the pressing, through quick cooling, the pressed composite membrane 200 and composite cathode 100 may be cooled to a temperature of about 80°C within about 10 minutes and may be cooled to a temperature of about 50°C over a period about 20 minutes. For example, after the pressing, the pressed composite membrane 200 and composite cathode 100 may be cooled to a temperature of about 80°C within about 5 minutes through quick cooling and may be cooled to a temperature of about 40°C over a period of about 20 minutes. For example, after the pressing, the pressed composite membrane 200 and composite cathode 100 may be cooled to a temperature of about 80°C within about 2 minutes through quick cooling and may be cooled to a temperature of about 35°C over a period of about 20 minutes. For example, after the pressing, the pressed composite membrane 200 and composite cathode 100 may be cooled to a temperature of about 80°C within about 1 minute through quick cooling and may be cooled to a temperature of about 30°C over a period of about 20 minutes. For example, after the pressing, the pressed composite membrane 200 and composite cathode 100 may be cooled to a temperature of about 80°C within about 1 minute through quick cooling and may be cooled to a temperature of about 25°C over a period of about 20 minutes.

Referring to FIG. 11H, an electrochemical cell may be manufactured by further disposing an anode (not illustrated) on the composite membrane 200 of the cathode-membrane assembly 300.

The electrochemical cell may be used in both a lithium primary cell and a lithium secondary cell. A shape of the electrochemical cell is not particularly limited and may have, for example, a coin shape, a button shape, a sheet shape, a laminate shape, a cylindrical shape, a flat shape, or a horn shape. In addition, the electrochemical cell may also be effectively used as a large-sized cell in an electric vehicle or the like.

The term "air" used in the specification is not limited to air in the atmosphere and may also be used to refer to a pure oxygen gas and combinations of gases including oxygen. A broad definition with respect to the term "air" may be applied to all of applications, for example, an air cell, an air electrode, and the like.

Hereinafter, the present disclosure will be described in more detail through examples and comparative examples. However, the examples are provided to illustrate the present disclosure and not to limit it.

### Examples

### Manufacture of Lithium Air Cell

### Comparative Example 1: Elec(IL)+Int(25u)

### Preparation of Cathode

Carbon black (Printex® manufactured by Orion Engineered Chemicals in USA), that is, a carbon-based porous particle; an ionic liquid electrolyte in which a lithium salt such as 0.5 M of lithium bis(trifluoromethanesulfonyl)imide (LiTFSi) was dissolved in an ionic liquid such as diethylmethyl(2-methoxyethyl)ammonium-bis(trifluoromethanesulfonyl)imide (DEME-TFSI); and a polytetrafluoroethylene (PTFE) binder (powder have an average particle size of 35 µm; manufactured by Sigma-Aldrich), were used in a weight ratio of about 1:3:0.2.

A first paste was prepared by mixing the PTFE binder and the ionic liquid in a mortar and introducing the carbon-based porous particle into the mortar.

A cathode having a shape of a free standing film was prepared by coating the prepared first paste between two polytetrafluoroethylene (PTFE) films and decreasing a gap between the two PTFE films using a roll press. A thickness of the cathode was about 31 µm.

### Preparation of Electrolyte Film

A polyethylene oxide (PEO) solution was obtained by dissolving about 16.32 g of polyethylene oxide having a weight average molecular weight (Mw) of 600,000 (PEO, Cat. No. 182028 manufactured by Sigma-Aldrich) in about 150 mL of acetonitrile, and then an electrolyte solution was prepared by introducing LiTFSi into the obtained PEO solution such that a molar ratio of ethylene oxide (EO) to lithium (Li) is about 18:1 while stirring the solution. A laminate was prepared by coating the electrolyte solution at a thickness of about 150 µm on one surface of an about 25 µm-thickness porous separator (Celgard® 3501), vacuum-drying the solution coated porous separator at a temperature of about 80°C for about 4 hours, and then coating the electrolyte solution on the other surface of the porous separator at a thickness of about 150 µm, and vacuum-drying the solution coated separator at a temperature of about 80°C for about 4 hours once again. A solid electrolyte film having a shape of a free standing film was prepared by disposing the prepared laminate between PTFE films and hot-pressing the laminate and the PTTE films at a temperature of about 120°C. A thickness of the solid electrolyte film was about 48 µm.

In the solid electrolyte film, a composition ratio of the porous separator to a second electrolyte was about 1:2.6 based on weight.

### Manufacture of Lithium Air Cell

A cathode-membrane laminate was prepared by disposing two cathodes (about 1 cm × 3 cm) on one surface of an electrolyte film (about 2.4 cm×3.4 cm) so as to be spaced apart from each other by a gap of about 0.5 mm. A cathode-membrane assembly having a shape of a free standing film was obtained by disposing the cathode-membrane laminate between two PTFE films, hot-pressing the cathode-membrane laminate and the PTFE films at a temperature of about 100°C, and naturally cooling the cathode-membrane laminate and the PTFE films.

The cathode-membrane laminate and the PTFE films were cooled to a temperature of about 80°C for about 100 minutes through a natural cooling process.

A carbon paper (about 2 cm × 3 cm, 25BA manufactured by SGL in Germany), that is, a gas diffusion layer, was disposed between the two cathodes while the cathode-membrane assembly was folded such that the two cathodes face each other.

A gas diffusion layer/cathode/electrolyte film/anode structure was prepared by disposing a lithium metal film having a thickness of about 30 µm and a size of about 2.15 cm × 3 cm, on the other surface of the electrolyte film and folding the lithium metal film and the cathode-membrane assembly (including the gas diffusion layer) such that the lithium metal film is symmetric with the cathode and with respect to the electrolyte film.

A portion of the gas diffusion layer which protrudes away from the area of contact between the gas diffusion layer and a cathode area (as shown in FIG. 10), may function as a positive electrode collector. A Cu sheet was disposed on one surface of the lithium metal film to be used as a negative electrode collector.

A lithium air cell was manufactured by respectively disposing an end plate on each of the negative electrode collector and on the surface of the anode opposite the negative electrode collector.

### Comparative Example 2: Elec+PEO+Int(25u)

### Preparation of Cathode

Carbon black (Printex® manufactured by Orion Engineered Chemicals in USA), that is, a carbon-based porous particle and a polytetrafluoroethylene (PTFE) binder (powder manufactured by Sigma-Aldrich) were combined in a weight ratio of about 1:0.2.

A rectangular porous particle layer having an area of about 6 cm² (2 cm×3 cm) and a thickness of about 30 µm was prepared by mechanically kneading the prepared carbon black and PTFE binder, pressing the kneaded carbon black and PTFE binder at a thickness of 30 µm using a roll press, and drying the pressed carbon black and PTFE binder at a temperature of about 60°C in an oven.

A polyethylene oxide (PEO) solution was obtained by dissolving about 16.32 g of polyethylene oxide with a weight average molecular weight (Mw) of 600,000 (PEO, Cat. No. 182028 manufactured by Sigma-Aldrich) in about 150 mL of acetonitrile and then an electrolyte solution was prepared by introducing LiTFSi into the obtained PEO solution, such that a molar ratio of ethylene oxide (EO) to lithium (Li) was about 18:1, while stirring the solution. A first electrolyte film was obtained by coating the resultant electrolyte solution on an about 50 µm-thickness Teflon film at a thickness of about 200 µm, and vacuum-drying the resultant solution and the Teflon film at a temperature of about 80°C for about 4 hours.

A laminate was prepared by disposing the obtained first electrolyte film on one surface of the rectangular porous particle layer. A cathode having a shape of a free standing film was prepared by disposing the laminate between PTFE films and hot-pressing the laminate and the PTFE films at a temperature of about 120°C using a press. A thickness of the cathode was about 45 µm.

### Preparation of Electrolyte Film

An electrolyte film was prepared in the same manner as Comparative Example 1.

### Manufacture of Lithium Air Cell

A lithium air cell was manufactured in the same manner as Comparative Example 1 except that the prepared cathode was used.

### Example 1: PEO+Elec+PEO+Int (25u)

### Preparation of Cathode

Carbon black (Printex® manufactured by Orion Engineered Chemicals in USA), that is, a carbon-based porous particle and a polytetrafluoroethylene (PTFE) binder (powder manufactured by Sigma-Aldrich) were combined in a weight ratio of about 1:0.2.

A rectangular porous particle layer having an area of about 6 cm² (about 2 cm × 3 cm) and a thickness of about 30 µm, was prepared by mechanically kneading the prepared carbon black and PTFE binder, pressing the kneaded carbon black and PTFE binder at a thickness of about 30 µm using a roll press, and drying the pressed carbon black and PTFE binder at a temperature of about 60°C in an oven.

A polyethylene oxide (PEO) solution was obtained by dissolving about 16.32 g of polyethylene oxide with a Mw of 600,000 (PEO, 182028 manufactured by Sigma-Aldrich) in about 150 mL of acetonitrile and then an electrolyte solution was prepared by introducing LiTFSi into the obtained PEO solution such that a molar ratio of ethylene oxide (EO) to lithium (Li) was about 18:1, while stirring the solution. A first electrolyte film was obtained by coating the resultant solution on an about 50 µm-thickness Teflon film at a thickness of about 100 µm, and vacuum-drying the resultant solution and the Teflon film at a temperature of about 80°C for about 4 hours.

A laminate was prepared by respectively disposing the obtained first electrolyte films on one surface and the other surface of the rectangular porous particle layer. A cathode having a shape of a free standing film was obtained by disposing the laminate between PTFE films and hot-pressing the laminate and the PTFE films at a temperature of about 120°C using a press. A thickness of the cathode was about 33 µm.

In the cathode, a composition ratio of the carbon black to a first electrolyte was about 1:2.4 based on weight.

### Preparation of Electrolyte Film

An electrolyte film was prepared in the same manner as Comparative Example 1.

### Manufacture of Lithium Air Cell

A cathode-membrane laminate was prepared by disposing two cathodes (about 1 cmx3 cm) on one surface of an electrolyte film (about 2.4 cmx3.4 cm) so as to be spaced a gap of about 0.5 mm apart from each other. A cathode-membrane assembly having a shape of a free standing film was obtained by disposing the cathode-membrane laminate between PTFE films, hot-pressing the cathode-membrane laminate and the PTFE films at a temperature of about 100°C for 10 minutes, and quickly cooling the cathode-membrane laminate and the PTFE films in a state of being pressured for about 20 minutes. The cathode-membrane laminate and the PTFE films were cooled to a temperature of about 80°C within about 1 minute through quick cooling and may be cooled to a temperature about 80°C for about 20 minutes.

A carbon paper (about 2 cmx3 cm, 25BA manufactured by SGL in Germany), that is, a gas diffusion layer was disposed between the two cathodes while the cathode-membrane assembly was folded such that the two cathodes face each other.

A gas diffusion layer/cathode/electrolyte film/anode structure was prepared by disposing a lithium metal film having a thickness of about 30 µm and a size of about 2.15 cm × 3 cm on the other surface of the electrolyte film and folding the lithium metal film and the cathode-membrane assembly including the gas diffusion layer such that the lithium metal film is symmetric with the cathode with respect to the electrolyte film.

A portion of the gas diffusion layer which protrudes away from the gas diffusion layer contacting a cathode area, may function as a positive electrode collector as in the case of FIG. 10. A Cu sheet was disposed on one surface of the lithium metal to be used as a negative electrode collector.

A lithium air cell was manufactured by respectively disposing an end plate on each of the negative electrode collector and on the other surface of the anode opposing the negative electrode collector.

In the lithium air cell, a composition ratio of a first electrolyte included in the cathode to a second electrolyte included in the electrolyte film was about 1:1.7 based on weight.

### Example 2: PEO+Elec+PEO+Int (12u)

### Preparation of Cathode

A cathode was prepared in the same manner as Example 1.

### Preparation of Electrolyte Film

An electrolyte film was prepared in the same manner as Comparative Example 1 except that a 12 µm-thickness porous separator (TM123AHS, manufactured by SKI in Korea) was used and a thickness of the solid electrolyte film was about 35 µm.

### Manufacture of Lithium Air Cell

A lithium air cell was manufactured in the same manner as example 1 except that the prepared cathode and electrolyte film were used.

### Example 3: Manufacture of Three-dimensional Lithium Air Cell and Lithium Air Cell Module

A cathode-membrane laminate was prepared by disposing a cathode having an area of about 104.5 cm² (about 5 cm × 20.9 cm) on one surface of an electrolyte film (about 5.2 cm × 22 cm). A cathode-membrane assembly having a shape of a free standing film was obtained by disposing the cathode-membrane laminate between PTFE films, hot-pressing the cathode-membrane laminate and the PTFE films at a temperature of about 100°C for about 10 minutes, and quickly cooling the cathode-membrane laminate and the PTFE films while simultaneously applying pressure for a period of about 20 minutes, as in the case of Example 1.

A cathode/electrolyte film/anode structure was prepared by disposing and assembling the cathode-membrane assembly and a lithium metal having a thickness of about 30 µm and an area of about 5 cm × 20.9 cm in assembly equipment.

In addition, in the assembly equipment, the cathode/electrolyte film/anode structure was folded at an angle of about 180° to surround a gas diffusion layer (having an area of about 5 cm × 2 cm) and was re-folded at an angle of about 180° in an opposite direction such that the gas diffusion layer was disposed on the cathode of the cathode/electrolyte film/anode structure. An operation of folding the cathode/electrolyte film/anode structure at the angle of about 180° was performed 10 times to manufacture a three-dimensional lithium air cell. For example, FIG. 10 may be referenced for the three-dimensional lithium air cell.

Five three-dimensional lithium air cells were laminated to manufacture a lithium air cell module.

A portion of the gas diffusion layer protruding from a cathode area may function as a positive electrode collector. A Cu sheet was disposed on one surface of the lithium metal to be used as a negative electrode collector. An end plate was disposed on each of the negative electrode collector and an anode opposing the negative electrode collector, respectively.

### Evaluation Example 1: Evaluation of Charge/discharge Characteristics

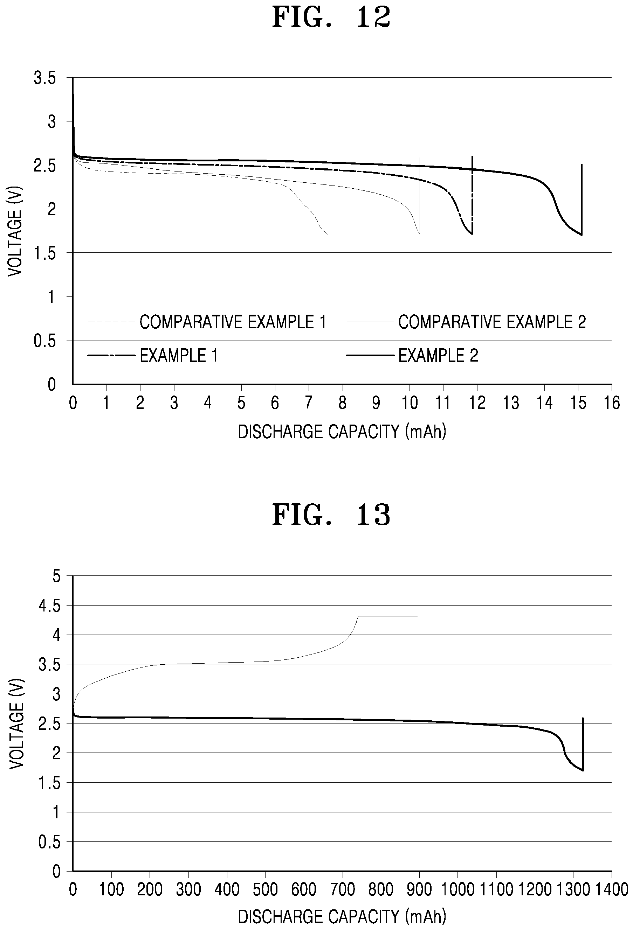

The lithium air cells manufactured in Examples 1 and 2 and Comparative Examples 1 and 2, were discharged to about 1.7 V (vs. Li) at a constant current of about 0.24 mA/cm² in an oxygen atmosphere having a pressure of about 1 atm and a temperature of about 60°, discharge capacities were measured, and the results of the measured discharge capacities are shown in Table 1 and FIG. 12.

**Table 1**

| | Average discharge voltage [V] | Discharge capacity [mAh] |
|---|---|---|
| Example 1 | 2.47 | 15.1 |
| Example 2 | 2.43 | 11.9 |
| Comparative example 1 | 2.33 | 7.6 |
| Comparative example 2 | 2.34 | 10.3 |

As shown in Table 1, average discharge voltages and discharge capacities of the lithium air cells in Examples 1 and 2 were improved as compared to average discharge voltages and discharge capacities of the lithium air cells in Comparative Examples 1 and 2.

These improved average discharge voltages and discharge capacities are due to a decrease in an interfacial resistance between the cathode and the electrolyte film in Examples 1 and 2 relative to an interfacial resistance between the cathode and the electrolyte film in Comparative Examples 1 and 2.

Also, the average discharge voltage and discharge capacity in Example 1 were considerably improved compared to the average discharge voltage and discharge capacity in Example 2. Without being limited by theory, it is believed this is because an ohmic resistance is decreased due to a decrease in a thickness of the electrolyte film. In addition, since a volume and weight of the electrolyte film is decreased, the energy density and specific energy of the lithium air cell may be improved.

### Evaluation example 2: Evaluation of Charge/discharge Characteristics

The lithium air cell module manufactured in Example 3 was discharged to about 1.7 V (vs. Li) at a constant current of about 0.24 mA/cm² and was charged to about 4.3 V (vs. Li) in an oxygen atmosphere having a pressure of about 1 atm and a temperature of about 60°, a discharge capacity was measured, and the results of the measured discharge capacity are shown in FIG. 13.

As shown in FIG. 13, the discharge capacity exceeded about 1000 mAh, and a specific energy was increased to about 554 Wh/kg. Therefore, it is possible to implement the electrochemical cell having a large area, a high capacity, and a high specific energy.

According to the exemplary embodiments, by employing the composite cathode and the cathode-membrane assembly having novel structures, it is possible to improve the discharge capacity and the energy density and/or specific energy of the electrochemical cell.

It should be understood that exemplary embodiments described herein should be considered in a descriptive sense only and not for purposes of limitation. Descriptions of features or aspects within each exemplary embodiment should be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

## Claims

1. A composite cathode for a metal air cell comprising:
a layer comprising porous particles; and
a first electrolyte disposed between porous particles of the layer comprising porous particles,
wherein the first electrolyte is disposed on at least a portion of a surface of the layer comprising porous particles, and
wherein a weight ratio of the porous particles to the first electrolyte is higher than 1:3.7;
wherein the first electrolyte comprises a solid electrolyte; and
wherein the porous particles are carbon-based.

2. The composite cathode of claim 1,
wherein the layer comprising porous particles comprises a first surface and an opposite second surface, and
wherein the first electrolyte has a concentration gradient in a direction from the first surface the second surface; and/or wherein a concentration of the first electrolyte at a middle point, which is equidistant from the first surface and the second surface, is less than a concentration of the first electrolyte at each of the first surface and the second surface.

3. The composite cathode of claim 1 or 2, wherein the composite cathode has a multi-layered structure comprising two or more layers of the porous particles.

4. The composite cathode of any of claims 1-3,
wherein the layer comprising porous particles comprises a first surface and an opposite second surface, and
wherein the composite cathode further comprises:
a first cathode layer disposed on the first surface of the layer comprising porous particles;
a second cathode layer disposed on the second surface of the layer comprising porous particles; and
a third cathode layer disposed between the first cathode layer and the second cathode layer, wherein the third cathode layer comprises the porous particles and the first electrolyte, optionally wherein each of the first cathode layer and the second cathode layer comprise the first electrolyte.

5. The composite cathode of any of claims 1-4, wherein the first electrolyte further comprises a liquid electrolyte, optionally wherein the first electrolyte comprises at least one selected from polyethylene oxide, polyvinyl alcohol, polyvinylpyrrolidone, and polyvinyl sulfone.

6. A cathode-membrane assembly comprising:
the composite cathode of any of claims 1-5; and
an ion conductive composite membrane disposed on a surface of the composite cathode.

7. The cathode-membrane assembly of claim 6, wherein the ion conductive composite membrane comprises:
a porous membrane; and
a second electrolyte disposed in a pore of the porous membrane, and
wherein the second electrolyte is disposed on at least a portion of a surface of the porous membrane, preferably wherein a weight ratio of the porous membrane to the second electrolyte is higher than 1:4.5.

8. The cathode-membrane assembly of claim 7, wherein the porous membrane comprises a first surface and an opposite second surface, and wherein the second electrolyte has a concentration gradient in a direction from the first surface to the second surface and/or wherein a concentration of the second electrolyte at a middle point, which is equidistant from the first surface and the second surface of the porous membrane, is less than a concentration of the second electrolyte at each of the first surface and the second surface of the porous membrane.

9. The cathode-membrane assembly of claim 7 or 8, wherein a weight ratio of the first electrolyte in the composite cathode to a second electrolyte in the ion conductive composite membrane is in the range of about 2.5:2.2 to about 1.5:3.8.

10. The cathode-membrane assembly of any of claims 7-9, wherein the ion conductive composite membrane has a multi-layer structure comprising two or more layers of the porous membrane.

11. The cathode-membrane assembly of any of claims 7-10,
wherein the porous membrane comprises a first surface and an opposite second surface, and
wherein the ion conductive composite membrane comprises:
a first composite membrane layer disposed on the first surface of the porous membrane;
a second composite membrane layer disposed on the second surface of the porous membrane; and
a third composite membrane layer disposed between the first composite membrane layer and the second composite membrane layer and comprising the porous membrane and the second electrolyte, optionally wherein each of the first and second composite membrane layers comprises the second electrolyte.

12. The cathode-membrane assembly of any of claims 7-11, wherein the porous membrane comprises a polymer which is impermeable to water vapor and at least one gas selected from oxygen, nitrogen, and carbon dioxide, preferably wherein the porous membrane comprises a polymer, and wherein the polymer comprises at least one selected from poly(2-vinyl pyridine), polytetrafluoroethylene, a tetrafluoroethylene-hexafluoropropylene copolymer, polychlorotrifluoroethylene, a perfluoroalkoxy copolymer, a fluorinated cyclic ether, polyethylene oxide diacrylate, polyethylene oxide dimethacrylate, polypropylene oxide diacrylate, polypropylene oxide dimethacrylate, polymethylene oxide diacrylate, polymethylene oxide dimethacrylate, a poly(C2 to C20 alkyl)diol diacrylate, a poly(C2 to C20 alkyl)diol dimethacrylate, polydivinylbenzene, polyether, polycarbonate, polyamide, polyester, polyvinyl chloride, polyimide, polycarboxylic acid, polysulfonic acid, polyvinyl alcohol, polysulfone, polystyrene, polyethylene, polypropylene, poly(p-phenylene), polyacetylene, poly(p-phenylene vinylene), polyaniline, polypyrrole, polythiophene, poly(2,5-ethylene vinylene), polyacene, poly(naphthalene-2,6-diyl), polyethylene oxide, polypropylene oxide, polyvinylidene fluoride, a copolymer of vinylidene fluoride and hexafluoropropylene, polyvinyl acetate, poly(vinyl butyral-co-vinyl alcohol-co-vinyl acetate), poly(methyl methacrylate-co-ethyl acrylate), polyacrylonitrile, polyvinyl chloride-co-vinyl acetate, poly(1-vinylpyrrolidone-co-vinyl acetate), polyvinylpyrrolidone, poly((C1 to C6 alkyl) acrylate), poly((C1 to C6 alkyl) methacrylate), polyurethane, polyvinyl ether, acrylonitrile-butadiene rubber, styrene-butadiene rubber, acrylonitrile-butadiene-styrene rubber, a sulfonated styrene/ethylene-butylene triblock copolymer; a polymer obtained from at least one acrylate monomer selected from ethoxylated neopentyl glycol diacylate, ethoxylated bisphenol A diacrylate, ethoxylated aliphatic urethane acrylate, an ethoxylated (C1 to C9 alkyl)phenol acrylate, and a (C1 to C6 alkyl) acrylate; polyvinyl alcohol, polyimide, an epoxy resin, and an acrylic resin.

13. A cathode-membrane assembly of any of claims 7-12, wherein at least one of the first electrolyte and the second electrolyte is disposed between the layer comprising porous particles and the porous membrane.

14. An electrochemical metal air cell comprising:
the cathode-membrane assembly of claim 6-13; and
an anode disposed on a surface of the ion conductive composite membrane of the cathode-membrane assembly.

15. The electrochemical cell of claim 14, further comprising one or more gas diffusion layers disposed on the composite cathode of the cathode-membrane assembly.

16. The electrochemical cell of claim 14 or 15, wherein each of the cathode-membrane assembly and the anode have one or more folded portions, optionally wherein the one or more folded portions of the cathode-membrane assembly and the one or more folded portions of the anode comprise a bend having an angle of about 180° such that at least two portions of the anode overlap each other.

17. The electrochemical cell of claim 16, comprising a plurality of gas diffusion layers in a thickness direction of the electrochemical cell, wherein each gas diffusion layer in the plurality of gas diffusion layers comprises a first surface and an opposite second surface,
wherein the cathode-membrane assembly comprises a bend having an angle of 180° such that the cathode of the cathode-membrane assembly comes into contact with the first surface and the second surface of each gas diffusion layer in the plurality of gas diffusion layers,
wherein the anode comprises a bend having an angle of about 180° in a same pattern as the cathode-membrane assembly such that the anode contacts the ion conductive composite membrane of the cathode-membrane assembly and
wherein at least two portions of the anode overlap each other between the two adjacent gas diffusion layers.

18. A method of preparing the cathode-membrane assembly of any of claims 6-13, the method comprising:
providing a porous particle layer;
disposing a first electrolyte layer on each of a first surface of the porous particle layer and an opposite second surface of the porous particle layer;
preparing a composite cathode by pressing the first electrolyte layer;
providing a porous membrane;
disposing a second electrolyte layer on each of a first surface of the porous membrane and an opposite second surface of the porous membrane;
preparing a composite membrane by pressing the second electrolyte layer;
disposing the composite cathode on the composite membrane; and
pressing the composite membrane and the composite cathode to form the cathode-membrane assembly;
wherein the first electrolyte comprises a solid electrolyte.

## Patentansprüche

1. Verbundstoffkathode für eine Metall-Luft-Zelle, umfassend:
eine Schicht, umfassend poröse Partikel; und
ein erster Elektrolyt, der zwischen porösen Partikeln der Schicht, die poröse Partikel umfasst, angeordnet ist,
wobei der erste Elektrolyt auf mindestens einem Abschnitt einer Oberfläche der Schicht, die poröse Partikel umfasst, angeordnet ist, und
wobei ein Gewichtsverhältnis der porösen Partikel zu dem ersten Elektrolyten höher als 1:3,7 ist;
wobei der erste Elektrolyt einen Feststoffelektrolyten umfasst; und
wobei die porösen Partikel kohlenstoffbasiert sind.

2. Verbundstoffkathode nach Anspruch 1,
wobei die Schicht, die poröse Partikel umfasst, eine erste Oberfläche und eine gegenüberliegende zweite Oberfläche umfasst, und
wobei der erste Elektrolyt einen Konzentrationsgradienten in einer Richtung von der ersten Oberfläche der zweiten Oberfläche aufweist; und/oder wobei eine Konzentration des ersten Elektrolyten an einem Mittelpunkt, der von der ersten Oberfläche und der zweiten Oberfläche gleich weit entfernt ist, weniger ist als eine Konzentration des ersten Elektrolyten an jeder von ersten Oberfläche und der zweiten Oberfläche.

3. Verbundstoffkathode nach Anspruch 1 oder 2, wobei die Verbundstoffkathode eine mehrschichtige Struktur aufweist, die zwei oder mehr Schichten der porösen Partikel umfasst.

4. Verbundstoffkathode nach einem der Ansprüche 1- 3,
wobei die Schicht, die poröse Partikel umfasst, eine erste Oberfläche und eine gegenüberliegende zweite Oberfläche umfasst, und
wobei die Verbundstoffkathode ferner Folgendes umfasst:
eine erste Kathodenschicht, die auf der ersten Oberfläche der Schicht, die poröse Partikel umfasst, angeordnet ist;
eine zweite Kathodenschicht, die auf der zweiten Oberfläche der Schicht, die poröse Partikel umfasst, angeordnet ist; und
eine dritte Kathodenschicht, die zwischen der ersten Kathodenschicht und der zweiten Kathodenschicht angeordnet ist, wobei die dritte Kathodenschicht die porösen Partikel und den ersten Elektrolyten umfasst, optional wobei jede von der ersten Kathodenschicht und der zweiten Kathodenschicht den ersten Elektrolyten umfasst.

5. Verbundstoffkathode nach einem der Ansprüche 1-4, wobei der erste Elektrolyt ferner einen flüssigen Elektrolyten umfasst, optional wobei der erste Elektrolyt mindestens eines ausgewählt aus Polyethylenoxid, Polyvinylalkohol, Polyvinylpyrrolidon und Polyvinylsulfon umfasst.

6. Kathode-Membran-Anordnung, umfassend:
die Verbundstoffkathode nach einem der Ansprüche 1-5; und
eine ionenleitende Verbundstoffmembran, die auf einer Oberfläche der Verbundstoffkathode angeordnet ist.

7. Kathode-Membran-Anordnung nach Anspruch 6, wobei die ionenleitende Verbundstoffmembran Folgendes umfasst:
eine poröse Membran; und
einen zweiten Elektrolyten, der in einer Pore der porösen Membran angeordnet ist, und
wobei der zweite Elektrolyt auf mindestens einem Abschnitt einer Oberfläche der porösen Membran angeordnet ist, vorzugsweise wobei ein Gewichtsverhältnis der porösen Membran zu dem zweiten Elektrolyten höher als 1:4,5 ist.

8. Kathode-Membran-Anordnung nach Anspruch 7, wobei die poröse Membran eine erste Oberfläche und eine gegenüberliegende zweite Oberfläche umfasst, und wobei der zweite Elektrolyt einen Konzentrationsgradienten in einer Richtung von der ersten Oberfläche zu der zweiten Oberfläche aufweist und/oder wobei eine Konzentration des zweiten Elektrolyten an einem Mittelpunkt, der von der ersten Oberfläche und der zweiten Oberfläche der porösen Membran gleich weit entfernt ist, weniger ist als eine Konzentration des zweiten Elektrolyten an jeder von der ersten Oberfläche und der zweiten Oberfläche der porösen Membran.

9. Kathode-Membran-Anordnung nach Anspruch 7 oder 8, wobei das Gewichtsverhältnis des ersten Elektrolyten in der Verbundstoffkathode zu einem zweiten Elektrolyten in der ionenleitenden Verbundstoffmembran in dem Bereich von etwa 2,5:2,2 bis etwa 1,5:3,8 ist.

10. Kathode-Membran-Anordnung nach einem der Ansprüche 7-9, wobei die ionenleitende Verbundstoffmembran eine mehrschichtige Struktur aufweist, die zwei oder mehr Schichten der porösen Membran umfasst.

11. Kathode-Membran-Anordnung nach einem der Ansprüche 7-10,
wobei die poröse Membran eine erste Oberfläche und eine gegenüberliegende zweite Oberfläche umfasst, und
wobei die ionenleitende Verbundstoffmembran Folgendes umfasst:
eine erste Verbundstoffmembranschicht, die auf der ersten Oberfläche der porösen Membran angeordnet ist;
eine zweite Verbundstoffmembranschicht, die auf der zweiten Oberfläche der porösen Membran angeordnet ist; und
eine dritte Verbundstoffmembranschicht, die zwischen der ersten zusammengesetzten Membranschicht und der zweiten Verbundstoffmembranschicht angeordnet ist und die poröse Membran und den zweiten Elektrolyten umfasst, optional wobei jede der ersten und der zweiten Verbundstoffmembranschicht den zweiten Elektrolyten umfasst.

12. Kathode-Membran-Anordnung nach einem der Ansprüche 7-11, wobei die poröse Membran ein Polymer umfasst, das für Wasserdampf und mindestens ein Gas, ausgewählt aus Sauerstoff, Stickstoff und Kohlendioxid undurchlässig ist, vorzugsweise wobei die poröse Membran ein Polymer umfasst, und wobei das Polymer mindestens eines umfasst, das ausgewählt ist aus Poly(2-vinylpyridin), Polytetrafluorethylen, einem Tetrafluorethylen-Hexafluorpropylen-Copolymer, Polychlortrifluorethylen, einem Perfluoralkoxy-Copolymer, einem fluorierten cyclischen Ether, Polyethylenoxiddiacrylat, Polyethylendimethacrylat, Polypropylenoxiddiacrylat, Polypropylenoxiddimethacrylat, Polymethylenoxiddiacrylat, Polymethylenoxiddimethacrylat, Polymethylenoxiddimethacrylat, einem Poly(C2- bis C20-alkyl)dioldiacrylat, einem Poly(C2- bis C20-alkyl)dioldimethacrylat, Polydivinylbenzol, Polyether, Polycarbonat, Polyamid, Polyester, Polyvinylchlorid, Polyimid, Polycarbonsäure, Polysulfonsäure, Polyvinylalkohol, Polysulfon, Polystyrol, Polyethylen, Polypropylen, Poly(p-phenylen), Polyacetylen, Poly(p-phenylenvinylen), Polyanilin, Polypyrrol, Polythiophen, Poly(2,5-ethylenvinylen), Polyacen, Poly(naphthalin-2,6-diyl), Polyethylenoxid, Polypropylenoxid, Polyvinylidenfluorid, einem Copolymer aus Vinylidenfluorid und Hexafluorpropylen, Polyvinylacetat, Poly(vinylbutyral-co-vinylalkohol-co-vinylacetat), Poly(methylmethacrylat-co-ethylacrylat), Polyacrylnitril, Polyvinylchlorid-co-vinylacetat, Poly(l-vinylpyrrolidon-co-vinylacetat), Polyvinylpyrrolidon, Poly((C1- bis C6-alkyl)acrylat), Poly((C1- bis C6-alkyl)methacrylat), Polyurethan, Polyvinylether, Acrylnitril-Butadien-Kautschuk, Styrol-Butadien-Kautschuk, Acrylnitril-Butadien-Styrol-Kautschuk, einem sulfonierten Styrol/Ethylen-Butylen-Triblock-Copolymer; einem Polymer, erlangt aus mindestens einem Acrylatmonomer, ausgewählt aus ethoxyliertem Neopentylglykoldiacylat, ethoxyliertem Bisphenol-A-Diacrylat, ethoxyliertem aliphatischem Urethanacrylat, einem ethoxylierten (C1- bis C9-Alkyl)phenolacrylat und einem (C1- bis C6-Alkyl)acrylat; Polyvinylalkohol, Polyimid, einem Epoxidharz und einem Acrylharz.

13. Kathode-Membran-Anordnung nach einem der Ansprüche 7-12, wobei mindestens einer von dem ersten Elektrolyten und dem zweiten Elektrolyt zwischen der Schicht, die poröse Partikel umfasst, und der porösen Membran angeordnet ist.

14. Elektrochemische Metall-Luft-Zelle, umfassend:
die Kathode-Membran-Anordnung nach Anspruch 6-13; und
eine Anode, die auf einer Oberfläche der ionenleitenden Verbundstoffmembran der Kathode-Membran-Anordnung angeordnet ist.

15. Elektrochemische Zelle nach Anspruch 14, ferner umfassend eine oder mehrere Gasdiffusionsschichten, die auf der Verbundstoffkathode der Kathode-Membran-Anordnung angeordnet sind.

16. Elektrochemische Zelle nach Anspruch 14 oder 15, wobei jede von der Kathode-Membran-Anordnung und der Anode einen oder mehrere gefaltete Abschnitte aufweisen, optional wobei der eine oder die mehreren gefalteten Abschnitte der Kathode-Membran-Anordnung und der eine oder die mehreren gefalteten Abschnitte der Anode eine Biegung mit einem Winkel von etwa 180° umfassen, sodass mindestens zwei Abschnitte der Anode einander überlappen.

17. Elektrochemische Zelle nach Anspruch 16, umfassend eine Vielzahl von Gasdiffusionsschichten in einer Stärkerichtung der elektrochemischen Zelle, wobei jede Gasdiffusionsschicht in der Vielzahl von Gasdiffusionsschichten eine erste Oberfläche und eine gegenüberliegende zweite Oberfläche umfasst,
wobei die Kathode-Membran-Anordnung eine Biegung mit einem Winkel von 180° aufweist, sodass die Kathode der Kathode-Membran-Anordnung mit der ersten Oberfläche und der zweiten Oberfläche von jeder Gasdiffusionsschicht in der Vielzahl von Gasdiffusionsschichten in Kontakt kommt,
wobei die Anode eine Biegung mit einem Winkel von etwa 180° in demselben Muster wie die Kathode-Membran-Anordnung aufweist, sodass die Anode die ionenleitende Verbundstoffmembran der Kathode-Membran-Anordnung berührt und
wobei mindestens zwei Teile der Anode zwischen den zwei benachbarten Gasdiffusionsschichten einander überlappen.

18. Verfahren zum Herstellen der Kathode-Membran-Anordnung nach einem der Ansprüche 6-13, das Verfahren umfassend:
Bereitstellen einer porösen Partikelschicht;
Anordnen einer ersten Elektrolytschicht auf jeder von einer ersten Oberfläche der porösen Partikelschicht und einer gegenüberliegenden zweiten Oberfläche der porösen Partikelschicht;
Herstellen einer Verbundstoffkathode durch Pressen der ersten Elektrolytschicht; Bereitstellen einer porösen Membran;
Anordnen einer zweiten Elektrolytschicht auf jeder von einer ersten Oberfläche der porösen Membran und einer gegenüberliegenden zweiten Oberfläche der porösen Membran;
Herstellen einer Verbundstoffmembran durch Pressen der zweiten Elektrolytschicht;
Anordnen der Verbundstoffkathode auf der Verbundstoffmembran; und Pressen der Verbundstoffmembran und der Verbundstoffkathode, um die Kathode-Membran-Anordnung zu bilden;
wobei der erste Elektrolyt einen Feststoffelektrolyten umfasst.

## Revendications

1. Cathode composite pour un accumulateur métal-air, comprenant :
une couche comprenant des particules poreuses ; et
un premier électrolyte disposé entre les particules poreuses de la couche comprenant des particules poreuses,
dans laquelle le premier électrolyte est disposé sur au moins une partie d'une surface de la couche comprenant des particules poreuses, et
dans laquelle un rapport de poids des particules poreuse au premier électrolyte est supérieur à 1:3,7 ;
dans laquelle le premier électrolyte comprend un électrolyte solide ; et
dans laquelle les particules poreuses sont à base de carbone.

2. Cathode composite selon la revendication 1,
dans laquelle la couche comprenant des particules poreuses comprend une première surface et une deuxième surface opposée, et
dans laquelle le premier électrolyte a un gradient de concentration dans une direction de la première surface à la deuxième surface ; et/où dans laquelle une concentration du premier électrolyte à un point central, qui est équidistant de la première surface et de la deuxième surface, est inférieure à une concentration du premier électrolyte à chacune de la première surface et de la deuxième surface.

3. Cathode composite selon la revendication 1 ou 2, la cathode composite ayant une structure multicouche comprenant deux couches ou plus des particules poreuses.

4. Cathode composite selon l'une quelconque des revendications 1-3,
dans laquelle la couche comprenant des particules poreuses comprend une première surface et une deuxième surface opposée, et
la cathode composite comprenant en outre :
une première couche cathodique disposée sur la première surface de la couche comprenant des particules poreuses ;
une deuxième couche cathodique disposée sur la deuxième surface de la couche comprenant des particules poreuses ; et
une troisième couche cathodique disposée entre la première couche cathodique et la deuxième couche cathodique, la troisième couche cathodique comprenant les particules poreuses et le premier électrolyte, optionnellement dans laquelle chacune de la première couche cathodique et de la deuxième couche cathodique comprend le premier électrolyte.

5. Cathode composite selon l'une quelconque des revendications 1-4, dans laquelle le premier électrolyte comprend en outre un électrolyte liquide, optionnellement dans laquelle le premier électrolyte comprend au moins un élément sélectionné entre : oxyde de polyéthylène, alcool polyvinylique, polyvinylpyrrolidone, et sulfone polyvinylique.

6. Ensemble cathode-membrane comprenant :
la cathode composite selon l'une quelconque des revendications 1-5 ; et
une membrane composite conductrice ionique disposée sur une surface de la cathode composite.

7. Ensemble cathode-membrane selon la revendication 6, dans lequel la membrane composite conductrice ionique comprend :
une membrane poreuse ; et
un deuxième électrolyte disposé dans un pore de la membrane poreuse, et
dans lequel le deuxième électrolyte est disposé sur au moins une partie d'une surface de la membrane poreuse, de préférence dans lequel un rapport de poids de la membrane poreuse au deuxième électrolyte est supérieur à 1:4,5.

8. Ensemble cathode-membrane selon la revendication 7, dans lequel la membrane poreuse comprend une première surface et une deuxième surface opposée, et dans lequel le deuxième électrolyte a un gradient de concentration dans une direction de la première surface à la deuxième surface et/ou dans lequel une concentration du deuxième électrolyte à un point central, qui est équidistant de la première surface et de la deuxième surface de la membrane poreuse, est inférieure à une concentration du deuxième électrolyte à chacune de la première surface et de la deuxième surface de la membrane poreuse.

9. Ensemble cathode-membrane selon la revendication 7 ou 8, dans lequel un rapport de poids du premier électrolyte dans la cathode composite à un deuxième électrolyte dans la membrane composite conductrice ionique est dans la gamme d'environ 2,5:2,2 à environ 1,5:3,8.

10. Ensemble cathode-membrane selon l'une quelconque des revendications 7-9, dans lequel la membrane composite conductrice ionique a une structure multicouche comprenant deux couches ou plus de la membrane poreuse.

11. Ensemble cathode-membrane selon l'une quelconque des revendications 7-10,
dans lequel la membrane poreuse comprend une première surface et une deuxième surface opposée, et
dans lequel la membrane composite conductrice ionique comprend :
une première couche de membrane composite disposée sur la première surface de la membrane poreuse ;
une deuxième couche de membrane composite disposée sur la deuxième surface de la membrane poreuse ; et
une troisième couche de membrane composite disposée entre la première couche de membrane composite et la deuxième couche de membrane composite et comprenant la membrane poreuse et le deuxième électrolyte, optionnellement dans lequel chacune des première et deuxième membranes composites comprend le deuxième électrolyte.

12. Ensemble cathode-membrane selon l'une quelconque des revendications 7-11, dans lequel la membrane poreuse comprend un polymère qui est imperméable à la vapeur d'eau et à au moins un gaz sélectionné entre l'oxygène, l'azote et le dioxyde de carbone, de préférence dans lequel la membrane poreuse comprend un polymère, et dans lequel le polymère comprend au moins un polymère sélectionné entre : poly(2-vinylpyridine), polytétrafluoroéthylène, un copolymère tétrafluoroéthylène-hexafluoropropylène, polychlorotrifluoroéthylène, un copolymère perfluoroalkoxy, un éther cyclique fluoré, diacrylate d'oxyde de polyéthylène, diméthacrylate d'oxyde de polyéthylène, diacrylate d'oxyde de polypropylène, diméthacrylate d'oxyde de polypropylène, diacrylate d'oxyde de polyméthylène, diméthacrylate d'oxyde de polyméthylène, un diacrylate de poly(C2 à C20 alkyl)diol, un diméthacrylate de poly(C2 à C20 alkyl)diol, polydivinylbenzène, polyéther, polycarbonate, polyamide, polyester, chlorure de polyvinyle, polyimide, acide polycarboxylique, acide polysulfonique, alcool polyvinylique, polysulfone, polystyrène, polyéthylène, polypropylène, poly(p-phénylène), polyacétylène, poly(p-phénylène vinylène), polyaniline, polypyrrole, polythiophène, poly(2,5-éthylène-vinylène), polyacène, poly(naphthalène-2,6-diyle), oxyde de polyéthylène, oxyde de polypropylène, fluorure de polyvinylidène, un copolymère de fluorure de vinylidène et hexafluoropropylène, acétate de polyvinyle, poly(vinylbutyral-co-vinylalcool-co-vinylacétate), poly(méthyl méthacrylate-co-éthylacrylate), polyacrylonitrile, chlorure de polyvinyle-co-vinylacétate, poly(1-vinylpyrrolidone-co-vinylacétate), polyvinylpyrrolidone, poly((C1 à C6 alkyle) acrylate), poly((C1 à C6 alkyle) méthacrylate), polyuréthane, éther de polyvinyle, caoutchouc acrylonitrile-butadiène, caoutchouc styrène-butadiène, caoutchouc acrylonitrile-butadiène-styrène, un copolymère tribloc styrène/éthylène-butylène sulfoné ; un polymère obtenu à partir d'au moins un monomère acrylate sélectionné entre : diacylate de glycol néopentylique éthoxylé, diacrylate de bisphénol A éthoxylé, acrylate d'uréthane aliphatique éthoxylé, un acrylate de (C1 à C9 alkyl)phénol éthoxylé, et un acrylate de (C1 à C6 alkyle) ; alcool polyvinylique, polyimide, une résine époxyde, et une résine acrylique.

13. Ensemble cathode-membrane selon l'une quelconque des revendications 7-12, dans lequel au moins l'un du premier électrolyte et du deuxième électrolyte est disposé entre la couche comprenant des particules poreuses et la membrane poreuse.

14. Accumulateur électrochimique métal-air comprenant :
l'ensemble cathode-membrane selon les revendications 6-13 ; et
une anode disposée sur une surface de la membrane composite conductrice ionique de l'ensemble cathode-membrane.

15. Accumulateur électrochimique selon la revendication 14, comprenant en outre une ou plusieurs couches de diffusion de gaz disposées sur la cathode composite de l'ensemble cathode-membrane.

16. Accumulateur électrochimique selon la revendication 14 ou 15, dans lequel chacun de l'ensemble cathode-membrane et de l'anode a une ou plusieurs parties pliées, optionnellement dans lequel la ou les parties pliées de l'ensemble cathode-membrane et la ou les parties pliées de l'anode comprennent un coude ayant un angle d'environ 180° de telle sorte qu'au moins deux parties de l'anode se chevauchent.

17. Accumulateur électrochimique selon la revendication 16, comprenant une pluralité de couches de diffusion de gaz dans une direction de l'épaisseur de l'accumulateur électrochimique, dans lequel chaque couche de diffusion de gaz dans la pluralité de couches de diffusion de gaz comprend une première surface et une deuxième surface opposée,
dans lequel l'ensemble cathode-membrane comprend un coude ayant un angle de 180° de telle sorte que la cathode de l'ensemble cathode-membrane entre en contact avec la première surface et la deuxième surface de chaque couche de diffusion de gaz dans la pluralité de couches de diffusion de gaz,
dans lequel l'anode comprend un coude ayant un angle d'environ 180° du même modèle que l'ensemble cathode-membrane de telle sorte que l'anode contacte la membrane composite conductrice ionique de l'ensemble cathode-membrane et
dans lequel au moins deux parties de l'anode se chevauchent entre les deux couches de diffusion de gaz adjacentes.

18. Procédé de préparation de l'ensemble cathode-membrane selon l'une quelconque des revendications 6-13, le procédé comprenant :
la fourniture d'une couche de particules poreuses ;
la disposition d'une première couche d'électrolyte sur chacune d'une première surface de la couche de particules poreuses et d'une deuxième surface opposée de la couche de particules poreuses ;
la préparation d'une cathode composite par pression de la première couche d'électrolyte ;
la fourniture d'une membrane poreuse ;
la disposition d'une deuxième couche d'électrolyte sur chacune d'une première surface de la membrane poreuse et d'une deuxième surface opposée de la membrane poreuse;
la préparation d'une membrane composite par pression de la deuxième couche d'électrolyte ;
la disposition de la cathode composite sur la membrane composite ; et
la pression de la membrane composite et de la cathode composite pour former l'ensemble cathode-membrane ;
dans lequel le premier électrolyte comprend un électrolyte solide.
